# EUROPEAN PATENT APPLICATION

(11) **EP 4 579 912 A1**
(43) Date of publication of application: **02.07.2025**
(21) Application number: 22962294.9
(22) Date of filing: 17.10.2022
(51) Int. Cl.: H01M 50/342

(54) **BATTERY CELL, BATTERY, ENERGY STORAGE APPARATUS, AND ELECTRICAL APPARATUS**

(71) Applicant: Contemporary Amperex Technology (Hong Kong) Limited, Central (HK)
(72) Inventor: SU, Huasheng, Ningde, Fujian 352100 (CN); DU, Xianglong, Ningde, Fujian 352100 (CN); XING, Chengyou, Ningde, Fujian 352100 (CN); LI, Quankun, Ningde, Fujian 352100 (CN); XU, Chunguang, Ningde, Fujian 352100 (CN); WANG, Peng, Ningde, Fujian 352100 (CN)
(74) Representative: Ran, Handong
(86) International application number: PCT/CN2022/125689
(87) International publication number: WO 2024/082096

(57) **Abstract**

The present application relates to the technical field of batteries, and provides a battery cell, a battery, an energy storage apparatus, and an electrical apparatus. The battery cell comprises a housing and a pressure relief member. The housing has a first wall, and the first wall has a first side surface facing the interior of the battery cell. The pressure relief member is disposed on the first wall. The pressure relief member has a weak structure. The pressure relief member is configured to relieve the internal pressure of the battery cell. In the thickness direction of the first wall, the weak structure does not go beyond the first side surface in a direction toward the interior of the battery cell. The structure can well protect the weak structure of the pressure relief member, to prevent abrasion or damage to the weak structure of the pressure relief member caused when the weak structure projects out of the first side surface during assembly or stacking storage of the battery cell, so as to prolong the service life of the pressure relief member and improve use reliability of the pressure relief member, thereby ensuring normal use of the pressure relief member, and lowering the risk of early functioning of the pressure relief member.

## Description

### Technical Field

The present application relates to the field of battery technology, and specifically, to a battery cell, a battery, an energy storage apparatus and an electrical apparatus.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing, where as a core component of new energy vehicles, batteries have high requirements in terms of both use safety and service life. A battery cell of a battery is obtained by assembling a positive electrode plate, a negative electrode plate and a separator into an electrode assembly (bare cell) in a winding or laminating manner, etc., then putting the bare cell into a housing, and finally injecting an electrolytic solution. The housing of the battery cell is usually provided with a pressure relief member to release the internal pressure of the battery cell when the battery cell experiences thermal runaway. However, the battery cells in the prior art have problems of poor use stability during use, which results in the relatively low use safety and relatively short service life of the battery cells.

### Summary

Embodiments of the present application provide a battery cell, a battery, an energy storage apparatus and an electrical apparatus, which can effectively prolong the service life and improve the use safety of the battery cell.

In a first aspect, embodiments of the present application provide a battery cell, including a housing and a pressure relief member, where the housing includes a first wall, and the first wall includes a first side surface facing the interior of the battery cell, the housing is configured to accommodate an electrode assembly; the pressure relief member is provided on the first wall, where the pressure relief member includes a weak structure, and in the thickness direction of the first wall, the weak structure does not extend beyond the first side surface in a direction facing the interior of the battery cell.

In the above technical solution, a pressure relief member is provided on the first wall of the housing, and the pressure relief member is provided with a weak structure, so that the pressure relief member can release the internal pressure of the battery cell when an abnormality occurs in the battery cell, so as to reduce the risk of explosion of the battery cell. By providing the weak structure of the pressure relief member to not extend beyond the first side surface of the first wall in the thickness direction of the first wall, the weak structure of the pressure relief member does not extend beyond the first side surface in the thickness direction of the first wall, so as to better protect the portion of the pressure relief member where the weak structure is provided, so that during the production and assembly processes of the battery cells or during the processes of multiple first walls being stacked with one over another, stored and transported, the phenomenon that the wear or damage occurs due to that the weak structure of the pressure relief member protrudes from the first side surface is alleviated, which on the one hand, can effectively extend the use duration of the pressure relief member, facilitating prolonging the service life of the battery cell with such pressure relief member, and on the other hand, can alleviate the phenomenon that the weak structure of the pressure relief member has weakened structural strength due to wear, facilitating the use reliability of the pressure relief member to ensure the normal use of the pressure relief member, and can further effectively reduce the risk of premature valve opening of the pressure relief member to improve the use safety of battery cell with such pressure relief member.

In some embodiments, the weak structure is a region of the pressure relief member where an indented groove is provided; the indented groove is provided on a side of the pressure relief member facing away from the interior of the battery cell, and the pressure relief member is provided with a protrusion on a side thereof facing the interior of the battery cell at a position corresponding to the intended groove, and the protrusion does not extend beyond the first side surface in a direction facing the interior of the battery cell.

In the above technical solution, by providing an indented groove at one side of the pressure relief member facing away from the interior of the battery cell, and forming a protrusion on the other side of the pressure relief member corresponding to the indented groove, the region of the pressure relief member where the indented groove is provided is a weak structure used to release the internal pressure of the battery cell. Such structure is simple and facilitates the pressure relief member to stably open the valve when an abnormality occurs in the battery cell. In addition, by providing the protrusion on the side of the pressure relief member facing away from the indented groove to not extend beyond the first side surface of the first wall in the thickness direction of the first wall, the protrusion of the pressure relief member does not extend beyond the first side surface in the thickness direction of the first wall, so as to better protect the portion of the pressure relief member where the indented groove is provided, so as to alleviate the phenomenon that the protrusion of the pressure relief member is worn or damaged during the production and assembly processes of the battery cell.

In some embodiments, in the thickness direction of the first wall, the distance between the protrusion and the first side surface is H, satisfying H>0 mm.

In the above technical solution, the distance between the protrusion and the first side surface in the thickness direction of the first wall is set to be greater than 0, that is, there is a gap between the protrusion and the first side surface in the thickness direction of the first wall, and the battery cell using such structure can further alleviate the phenomenon of wear or damage of the protrusion during the production and assembly processes of the battery cell, which is conducive to ensuring the use reliability and use stability of the pressure relief member.

In some embodiments, the pressure relief member includes a first surface facing the interior of the battery cell, the first surface is provided with a groove, and at least a part of the protrusion is accommodated in the groove.

In the above technical solution, by providing a groove on the first surface of the pressure relief member facing the interior of the battery cell, at least a part of the protrusion is accommodated in the groove, so as to further better protect the protrusion, to alleviate the phenomenon that the protrusion of the pressure relief member is worn or damaged during the manufacturing and forming or when the pressure relief member is assembled with the first wall, thus facilitating prolonging the service life and improving the use stability of the pressure relief member.

In some embodiments, in the thickness direction of the first wall, the protrusion does not extend beyond the first surface.

In the above technical solution, by making the protrusion not extend beyond the first surface in the thickness direction of the first wall, the protrusion is entirely accommodated in the groove provided on the first surface. For the pressure relief member adopting such structure, on the one hand, it facilitates improving the protection effect on the protrusion, to reduce the risk of the protrusion being worn or damaged, and on the other hand, during the processes of multiple pressure relief members being stacked with one over another, stored or transported, the influence of interference between the pressure relief members can be reduced, thereby facilitating stacking of the pressure relief members and saving space occupied.

In some embodiments, the first surface is coplanar with the first side surface; or, in the thickness direction of the first wall, the first surface is further away from the interior of the battery cell than the first side surface.

In the above technical solution, by providing the first surface of the pressure relief member to be coplanar with the first side surface or further away from the interior of the battery cell than the first side surface, it can be achieved that the protrusion accommodated in the groove of the pressure relief member does not extend beyond the first side surface in the thickness direction of the first wall, enabling simple structure and convenient and easy manufacturing and assembling.

In some embodiments, the pressure relief member includes a pressure relief part and an installation part; the pressure relief part is provided with the indented groove, and the protrusion is formed on the side of the pressure relief part facing the interior of the battery cell at a position corresponding to the indented groove. The installation part is connected to the first wall, and the installation part is provided surrounding the pressure relief part, where the thickness of the installation part is greater than the thickness of the pressure relief part, and the installation part encloses the pressure relief part to form the groove.

In the above technical solution, the pressure relief member is composed of a pressure relief part and an installation part surrounding the outside of the pressure relief part, and the thickness of the installation part is set to be greater than the thickness of the pressure relief part. By using such structure, on the one hand, it facilitates the pressure relief member being connected to the first wall through the installation part to improve the connection strength between the pressure relief member and the first wall, and on the other hand, the installation part encloses the pressure relief part to form a groove for accommodating the protrusion. This structure is simple and easy to protect the protrusion.

In some embodiments, the thickness of the installation part is L₁, satisfying 0.1mm≤L₁≤0.4mm.

In the above technical solution, by setting the thickness of the installation part of the pressure relief member to be 0.1 mm to 0.4 mm, on the one hand, the phenomenon of insufficient connection strength between the installation part and the first wall caused by too small thickness of the installation part can be alleviated, and on the other hand, the phenomenon that the installation part occupies too much space due to too large thickness of the installation part can be alleviated.

In some embodiments, the minimum thickness of the pressure relief part at the position thereof where the indented groove is provided is L₂, satisfying 0.03mm≤L₂≤0.15mm.

In the above technical solution, the minimum thickness of the pressure relief part at the position thereof where the indented groove is provided is set to be 0.03mm to 0.15mm, that is, the residual thickness of the pressure relief part at the position thereof where the indented groove is provided is between 0.03mm and 0.15mm, The pressure relief member adopting this structure can, on the one hand, alleviate the phenomenon that the pressure relief member is easily damaged due to too small minimum thickness of the pressure relief part at the position thereof where the indented groove is provided, and on the other hand, can alleviate the phenomenon that the valve opening pressure required for the pressure relief part is too large due to too large minimum thickness of the pressure relief part at the position thereof where the indented groove is provided, thus facilitating reducing the use risk of the battery cell.

In some embodiments, the indented groove is an annular groove, and in the thickness direction of the first wall, the region of the pressure relief part located inside the indented groove is arched in a direction away from the interior of the battery cell.

In the above technical solution, by providing the indented groove to be in an annular structure, and providing the region of the pressure relief part located inside the indented groove to be in an arched shape, for the pressure relief member adopting this structure, the indented groove can be easily provided on the pressure relief part, to reduce the difficulty in processing the indented groove.

In some embodiments, the pressure relief member is of a circular structure.

In the above technical solution, by providing the pressure relief member to be of a circular structure, it is easy to assemble the pressure relief member to the first wall, facilitating reducing the difficulty in assembling and processing.

In some embodiments, the pressure relief member and the first wall are of a split structure, the first wall is provided with a pressure relief hole, and the pressure relief member covers the pressure relief hole.

In the above technical solution, by providing the pressure relief member and the first wall to be of a split structure, and providing a pressure relief hole on the first wall, the pressure relief member covers the pressure relief hole, so as to achieve the function of the pressure relief member releasing the internal pressure of the battery cell. By using such a structure, it is easy to provide and install the pressure relief member on the first wall, facilitating reducing the difficulty of assembly and facilitating the later repair and replacement of the pressure relief member. In some embodiments, the first side surface is provided with an accommodation groove, the pressure relief hole runs through the groove bottom surface of the accommodation groove, and the accommodation groove is used to accommodate at least a part of the pressure relief member.

In the above technical solution, by providing an accommodation groove on the first side surface of the first wall, the pressure relief member can be accommodated in the accommodation groove, thus by using this structure, it is realized that the protrusion of the pressure relief member does not extend beyond the first side surface of the firs wall in the thickness direction of the first wall, enabling simple structure and making it easy to implement.

In some embodiments, the accommodation groove includes a first groove and a second groove, the second groove is provided on the groove bottom surface of the first groove, and the pressure relief hole runs through the groove bottom surface of the second groove, where the pressure relief member is installed in the second groove and abuts against the groove bottom surface of the second groove, and the protrusion is accommodated in the first groove.

In the above technical solution, the accommodation groove includes a first groove and a second groove provided sequentially in the thickness direction of the first wall, the second groove is provided on the groove bottom surface of the first groove, and the pressure relief hole runs through the groove bottom surface of the second groove. That is, in the thickness direction of the first wall, the second groove is provided between the first groove and the pressure relief hole, so that the pressure relief member is installed in the second groove and the protrusion of the pressure relief member is accommodated in the first groove, to realized that the protrusion does not extend beyond the first side surface of the first wall in the thickness direction of the first wall. This structure is simple and easy to assemble.

In some embodiments, in the thickness direction of the first wall, the first wall includes a second side surface provided opposite to the first side surface, the second side surface is provided with an accommodation groove, the pressure relief hole runs through the groove bottom surface of the accommodation groove, and the accommodation groove is used to accommodate at least a part of the pressure relief member.

In the above technical solution, by providing an accommodation groove on the second side surface of the first wall facing away from the second side surface, the pressure relief member can be accommodated in the accommodation groove, so as to install the pressure relief member on the side of the first wall facing away from the interior of the battery cell, thus by using this structure, it is realized that the protrusion of the pressure relief member does not extend beyond the first side surface of the first wall in the thickness direction of the first wall, enabling simple structure and making it easy to implement.

In some embodiments, the accommodation groove includes a third groove and a fourth groove, the fourth groove is provided on the groove bottom surface of the third groove, and the pressure relief hole runs through the groove bottom surface of the fourth groove, where the pressure relief member is installed in the fourth groove and abuts against the groove bottom surface of the fourth groove, and the protrusion is accommodated in the pressure relief hole.

In the above technical solution, the accommodation groove includes a third groove and a fourth groove provided sequentially in the thickness direction of the first wall, the fourth groove is provided on the groove bottom surface of the third groove, and the pressure relief hole runs through the groove bottom surface of the fourth groove. That is, in the thickness direction of the first wall, the fourth groove is provided between the third groove and the pressure relief hole, so that the pressure relief member is installed in the fourth groove and the protrusion of the pressure relief member is accommodated in the pressure relief hole, to achieve that the protrusion does not extend beyond the first side surface of the first wall in the thickness direction of the first wall. This structure is simple and easy to assemble.

In some embodiments, the weak structure is a thinned region (i.e., a region where the thickness is reduced) of the pressure relief member; and in the thickness direction of the first wall, the surface, close to the interior of the battery cell, of the thinned region of the pressure relief member does not extend beyond the first side surface in a direction facing the interior of the battery cell.

In the above technical solution, by reducing the thickness of partial region on the pressure relief member, the thinned region of the pressure relief member is used as a weak structure for releasing the internal pressure of the battery cell. The structure is simple, and has low processing difficulty. In addition, the surface, close to the interior of the battery cell, of the thinned region of the pressure relief member does not extend beyond the first side surface of the first wall in the thickness direction of the first wall, such that the thinned region of the pressure relief member does not extend beyond the first side surface in the thickness direction of the first wall, so as to better protect the thinned region of the pressure relief member, and to alleviate the phenomenon that the thinned region of the pressure relief member is worn or damaged during the production and assembly processes of the battery cell.

In some embodiments, the battery cell further includes a protection member; the protection member is provided at one side of the first wall facing away from the interior of the battery cell, the protection member covers the pressure relief hole, and the protection member is used to protect the pressure relief member.

In the above technical solution, the battery cell is further provided with a protection member for protecting the pressure relief member, the protection member is provided at one side of the first wall facing away from the interior of the battery cell, so as to better protect the pressure relief member, alleviate the risk of the pressure relief member being worn or damaged by other components during later use, and ensure the use stability and use reliability of the pressure relief member.

In some embodiments, in the thickness direction of the first wall, the first wall includes a second side surface provided opposite to the first side surface, the second side surface is provided with an installation groove, and at least a part of the protection member is accommodated in the installation groove.

In the above technical solution, by providing, on the second side surface of the first wall, an installation groove for accommodating the protection member, the protection member can be accommodated in the installation groove, thereby better protecting the protection member, so as to alleviate the phenomenon that the protection member is damaged due to the influence of the external environment during later use, and further facilitate prolonging the service life of the protection member.

In some embodiments, in the thickness direction of the first wall, the protection member does not extend beyond the second side surface.

In the above technical solution, the protection member does not extend beyond the second side surface of the first wall in the thickness direction of the first wall, that is, the protection member is entirely accommodated in the installation groove, and the battery cell using this structure can improve the protection effect on the protection member to reduce the risk of the protection member being damaged during use.

In some embodiments, the housing includes a casing and an end cover assembly, the housing includes an opening, the end cover assembly includes an end cover, and the end cover covers the opening, where the first wall is the end cover.

In the above technical solution, the first wall is the end cover, that is, the pressure relief member is provided on the end cover of the end cover assembly, and for the battery cell using this structure, it is easy to provide the pressure relief member on the housing, facilitating reducing the difficulty in providing the pressure relief member on the housing.

In some embodiments, the end cover assembly further includes electrode terminals, a connecting member and a first insulation member; the electrode terminals are installed on the end cover in an insulative manner; the connecting member is provided on one side of the end cover facing away from the interior of the battery cell, and the connecting member is connected to the electrode terminals; and the first insulation member is provided between the connecting member and the end cover, to insulate and isolate the connecting member from the end cover.

In the above technical solution, the electrode terminals are installed on the end cover in an insulative manner, and the electrode terminals are connected to the connecting member provided on the side of the end cover facing away from the interior of the battery cell, so as to stably fix the electrode terminals on the end cover and facilitate assembly. Therefore, the input of electric energy into the battery cell and the output of electric energy from the battery cell can be realized through the electrode terminals provided on the end cover. In addition, a first insulation member is further provided between the connecting member and the end cover, and the insulation and isolation of the connecting member from the end cover can be achieved through the first insulation member, so as to reduce the risk of short circuit in the battery cell.

In some embodiments, the end cover assembly further includes a current collecting member and a second insulation member; the current collecting member is provided at one side of the end cover facing the interior of the battery cell, and the current collecting member is connected to the electrode terminals and the electrode assembly; and the second insulation member is provided between the current collecting member and the end cover, to insulate and isolate the current collecting member from the end cover.

In the above technical solution, the side of the end cover facing away from the connecting member is further provided with a current collecting member. The current collecting member can connect the electrode terminals and the electrode assembly, thereby realizing the electrical connection between the electrode assembly and the electrode terminals. The structure is simple, and easy to assemble. In addition, a second insulation member is further provided between the current collecting member and the end cover, and the insulation and isolation of the current collecting member from the end cover can be achieved through the second insulation member, so as to reduce the risk of short circuit in the battery cell.

In a second aspect, embodiments of the present application further provide a battery, including the battery cell above.

In a third aspect, embodiments of the present application further provide an energy storage apparatus, including the battery above.

In a fourth aspect, embodiments of the present application further provide an electrical apparatus, including the battery cell above.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other drawings based on the drawings without paying creative efforts.
FIG. 1 is a schematic structural diagram of a vehicle provided by some embodiments of the present application;
FIG. 2 is a structural exploded view of a battery provided by some embodiments of the present application;
FIG. 3 is a structural exploded view of a battery cell provided by some embodiments of the present application;
FIG. 4 is a schematic structural diagram of an end cover assembly provided by some embodiments of the present application;
FIG. 5 is a structural exploded view of an end cover assembly provided by some embodiments of the present application;
FIG. 6 is a sectional view of a pressure relief member being connected to a first wall, provided by some embodiments of the present application;
FIG. 7 is a local enlarged view of part A in FIG. 6 where the pressure relief member is connected to the first wall;
FIG. 8 is a local sectional view of a pressure relief member being connected to a first wall, provided by yet some embodiments of the present application;
FIG. 9 is a schematic structural diagram of multiple first walls being stacked with one over another after the pressure relief member is connected to the first wall, provided by some embodiments of the present application;
FIG. 10 is a schematic structural diagram of a pressure relief member provided by some embodiments of the present application;
FIG. 11 is a sectional view of a pressure relief member provided by some embodiments of the present application;
FIG. 12 is a sectional view of a pressure relief member being connected to a first wall, provided by still some embodiments of the present application;
FIG. 13 is a local enlarged view of part B in FIG. 12 where the pressure relief member is connected to the first wall;
FIG. 14 is a sectional view of a pressure relief member being connected to a first wall, provided by yet still some embodiments of the present application;
FIG. 15 is a local enlarged view of part C in FIG. 14 where the pressure relief member is connected to the first wall;
FIG. 16 is a sectional view of a pressure relief member being connected to a first wall, provided by some other embodiments of the present application; and
FIG. 17 is a local enlarged view of part D in FIG. 16 where the pressure relief member is connected to the first wall.

Reference signs: 1000-vehicle; 100-battery; 10-box; 11-first box body; 12-second box body; 20-battery cell; 21-casing; 211-opening; 22-electrode assembly; 221-tab; 23-end cover assembly; 231-end cover; 231a-first wall; 2311-first side surface; 2312-pressure relief hole; 2313-accommodation groove; 2313a-first groove; 2313b-second groove; 2313c-third groove; 2313d-fourth groove; 2314-second side surface; 2315-installation groove; 2316-lead-out hole; 232-pressure relief member; 2321-indented groove; 2322-protrusion; 2323-first surface; 2324-groove; 2325-installation part; 2326-pressure relief part; 233-installation member; 234-protection member; 235-electrode terminal; 236-connecting member; 237-first insulation member; 238-sealing member; 239-current collecting member; 240-second insulation member; 200-controller; 300-motor; X-thickness direction of the first wall; Y-first direction.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, not all of the embodiments of the present application. Based on the embodiments in the present application, all other embodiments obtained by those of ordinary skill in the art without paying creative efforts fall within the scope of protection of the present application.

Unless otherwise defined, all technical and scientific terms used in the present application have the same meanings as commonly understood by those skilled in the art of the present application; the terms used in the description of the present application are for the purpose of describing specific examples only and are not intended to limit the present application; the terms "including" and "having" and any variations thereof in the description and claims of the present application and the above description of the drawings are intended to cover non-exclusive inclusion. The terms "first", "second", etc. in the description and claims of the present application or the above-mentioned drawings are used to distinguish different objects, rather than to describe a specific order or priority relationship.

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments.

In the description of the present application, it should be indicated that unless otherwise clearly specified and limited, technical terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of simplicity, detailed descriptions of the same components in different embodiments are omitted. It should be understood that the thickness, length, width and other dimensions of various components in the embodiments of the present application shown in the drawings, as well as the overall thickness, length, width and other dimensions of the integrated device, are only illustrative and should not constitute any limitation to the present application.

"Plurality/multiple" appearing in the present application means two or more (including two).

In the present application, the battery cell may include lithium ion secondary battery, lithium ion primary battery, lithium sulfur battery, sodium ion battery, or magnesium ion battery, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box for packaging one or more battery cells or more battery modules. The box may prevent a liquid or other foreign object from affecting the charging or discharging of the battery cells.

The battery cell includes an electrode assembly and an electrolytic solution. The electrode assembly may be composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the part of the positive current collector not coated with the positive electrode active material layer is used as the positive electrode tab, so that the input of the electric energy into the positive electrode plate and the output of the electric energy from the positive electrode plate is realized through the positive electrode tab. Taking a lithium-ion battery as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the part of the negative current collector not coated with the negative electrode active material layer is used as the negative electrode tab, so that the input of the electric energy into the negative electrode plate and the output of the electric energy from the negative electrode plate is realized through the negative electrode tab. The material of the negative current collector may be copper, and the negative electrode active material may be carbon or silicon, etc. In order to ensure that a large current passes without fusing, the number of positive electrode tabs is multiple and the positive electrode tabs are stacked together, and the number of negative electrode tabs is multiple and the negative electrode tabs are stacked together.

The material of the separator may be polypropylene (PP) or polyethylene (PE), etc. In addition, the electrode assembly may be in a winding structure or may be in a laminated/stacked structure, which is not limited in the embodiments of the present application.

The battery, which has outstanding advantages such as high energy density, low environmental pollution, high power density, long service life, wide application range, and small self-discharge coefficient, is an important part of the development of new energy today. A battery cell of the battery is obtained by assembling a positive electrode plate, a negative electrode plate and a separator into an electrode assembly (bare cell) in a winding or laminating manner, etc., then putting the bare cell into a housing, and finally injecting an electrolytic solution. However, with the continuous development of battery technology, higher requirements have been put forward for the safety performance and service life of batteries. Among them, the use safety and service life of the battery cell directly determine the safety performance and service life of the battery.

For ordinary battery cells, when the battery cells in the battery are short-circuited or overcharged, the sudden rise in internal gas pressure of the battery cell may be easily caused by the thermal runaway, leading to safety hazards such as battery fire and explosion. Therefore, an explosion-proof valve is usually provided on the housing of the battery cell, so that when the battery cell experiences thermal runaway, the internal gas pressure of the battery cell can break through the explosion-proof valve, so that the internal gas pressure of the battery cell can be released, thereby reducing the risk of fire and explosion in the battery cell.

The inventors found that existing explosion-proof valves are usually provided with indented groove(s) to make the explosion-proof valve have a weak structure, so that the region of the explosion-proof valve where the indented groove is provided can be broken under the impact of internal gas pressure generated by thermal runaway of the battery cell, thereby better ensuring that the internal gas pressure of the battery cell is released to improve the use safety of the battery cell. However, the indented groove on the explosion-proof valve is usually formed by the stamping process, so that a protruding structure may be formed at the other side of the explosion-proof valve at the position corresponding to the indented groove, and for the explosion-proof valve of this structure, the phenomenon that the protruding structure is worn or damaged during the production and assembly processes of the battery cell may often occur, so that on the one hand, the service life of the explosion-proof valve is greatly affected, which is not conducive to prolonging the service life of the battery cell; and on the other hand, it may lead to weakened structural strength of the portion of the explosion-proof valve where the indented groove is provided, which may easily cause reduced use stability and reliability of the explosion-proof valve, further result in that the normal use of the explosion-proof valve cannot be ensured and that the risk of the explosion-proof valve being opened in advance may easily occur, which is not conducive to the use safety of the battery cell.

Based on the above considerations, in order to solve the problems of short service life and poor use safety of the battery cell, the inventors designed, after in-depth researches, a battery cell including a housing and a pressure relief member. The housing includes a first wall including a first side surface facing the interior of the battery cell, and the housing is used to accommodate the electrode assembly. The pressure relief member is disposed on the first wall, and the pressure relief member is configured to release the internal pressure of the battery cell. The pressure relief member includes a weak structure, where in the thickness direction of the first wall, the weak structure does not extend beyond the first side surface in a direction facing the interior of the battery cell.

In the battery cell of this structure, a pressure relief member is provided on the first wall of the housing, and the pressure relief member is provided with a weak structure, so that the pressure relief member can release the internal pressure of the battery cell when an abnormality occurs in the battery cell, so as to reduce the risk of explosion of the battery cell. By providing the weak structure of the pressure relief member to not extend beyond the first side surface of the first wall in the thickness direction of the first wall, the weak structure of the pressure relief member does not extend beyond the first side surface in the thickness direction of the first wall, so as to better protect the portion of the pressure relief member provided with the weak structure, so that during the production and assembly processes of the battery cells or during the processes of multiple first walls being stacked with one over another, stored and transported, the phenomenon that the wear or damage occurs due to that the weak structure of the pressure relief member protrudes from the first side surfaces is alleviated, which on the one hand, can effectively extend the use duration of the pressure relief member, facilitating prolonging the service life of the battery cell with such pressure relief member, and on the other hand, can alleviate the phenomenon that the weak structure of the pressure relief member has weakened structural strength due to wear, facilitating the use reliability of the pressure relief member to ensure the normal use of the pressure relief member, and can further effectively reduce the risk of premature valve opening of the pressure relief member to improve the use safety of battery cell with such pressure relief member.

The battery cell disclosed in the embodiments of the present application can be used in, but is not limited to, vehicles, ships, aircraft or other electrical apparatuses. The power supply system of the electrical apparatus, composed of battery cells, batteries, etc. disclosed in this application, may be used. In this way, it is beneficial to improve the use stability and use reliability of the pressure relief member to ensure the normal use of the pressure relief member, thereby prolonging the service life and improving the use safety of the battery cell effectively.

Embodiments of the present application provide an electrical apparatus using the battery as the power supply. The electrical apparatus may be, but not limited to, a mobile phone, a panel computer, a notebook computer, an electric toy, an electric tool, an electric power cart, an electric vehicle, a ship, a spacecraft or the like. In the above, the electric toy includes a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by taking a vehicle 1000 as an electrical apparatus as example.

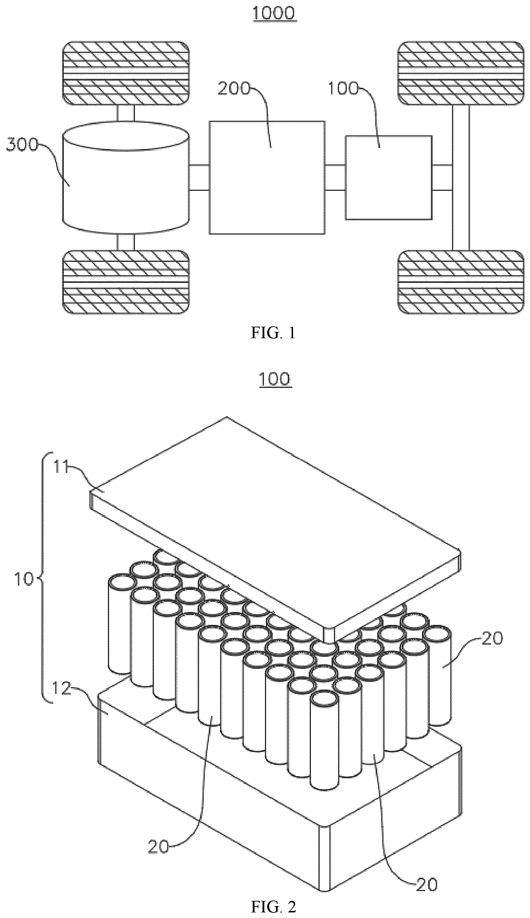

Referring to FIG. 1, FIG. 1 is a schematic structural diagram of a vehicle 1000 provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is a structural exploded view of a battery 100 provided by some embodiments of the present application. The battery 100 includes a box 10 and battery cells 20, and the battery cells 20 are accommodated in the box 10. In the above, the box 10 is used to provide an assembly space for the battery cells 20, and the box 10 may be in a variety of structures. In some embodiments, the box 10 may include a first box body 11 and a second box body 12. The first box body 11 and the second box body 12 cover each other. The first box body 11 and the second box body 12 jointly define the assembly space for accommodating the battery cells 20. The second box body 12 may be in a hollow structure with one side open, and the first box body 11 may be in a plate-like structure. The first box body 11 covers the open side of the second box body 12, so that the first box body 11 and the second box body 12 jointly define an assembly space; and the first box body 11 and the second box body 12 may also be both in a hollow structure with one side open, and the open side of the first box body 11 covers the open side of the second box body 12. Of course, the box 10 formed by the first box body 11 and the second box body 12 may be in various shapes, such as a cylinder, a cuboid and so on.

In the battery 100, there may be multiple battery cells 20, and the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other, and then the whole composed of the multiple battery cells 20 is accommodated in the box 10. Certainly, the battery 100 may be formed in the way that the multiple battery cells 20 are first in serial or in parallel or in hybrid connection with each other to form battery modules, and then the multiple battery modules are in serial or in parallel or in hybrid connection with each other to form a whole, and accommodated in the box 10. The battery 100 may further include other structures. For example, the battery 100 may further include a bus component for realizing electrical connection between the multiple battery cells 20.

In the above, the battery cell 20 may be a secondary battery or a primary battery; and may also be a lithium-sulfur battery, a sodium-ion battery or a magnesium-ion battery, but is not limited thereto. The battery cell 20 may be in a shape of cylinder, flat body, cuboid or in other shape. Exemplarily, in FIG. 2, the battery cell 20 is in a cylinder structure.

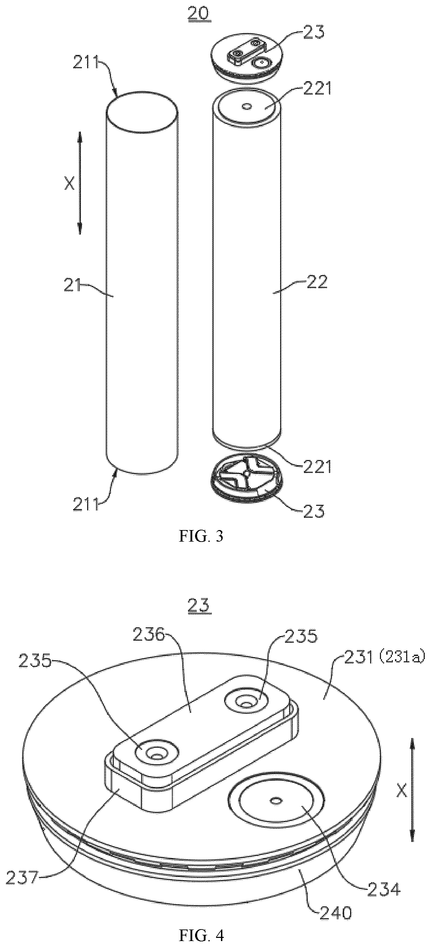

Referring to FIG. 3 and FIG. 4, FIG. 3 is a structural exploded view of a battery cell 20 provided by some embodiments of the present application; and FIG. 4 is a schematic structural diagram of an end cover assembly 23 provided by some embodiments of the present application. The battery cell 20 includes a casing 21, an electrode assembly 22 and end cover assemblies 23. The casing 21 includes openings 211, the electrode assembly 22 is accommodated in the casing 21, the end cover assemblies 23 cover the openings 211, and the end cover assemblies 23 are electrically connected with the electrode assembly 22 to realize input of electric energy into the battery cell 20 and output of the electric energy from the battery cell.

In the above, the casing 21 and the end cover assemblies 23 together form the housing for accommodating the electrode assembly 22, that is, the housing of the battery cell 20 is composed of the casing 21 and the end cover assemblies 23. The end cover assembly 23 includes an end cover 231, and the end cover 231 covers the opening 211 of the casing 21.

The casing 21 is further used to accommodate an electrolyte, such as electrolytic solution. The casing 21 may be in various structure forms. The casing 21 may be made of a variety of materials, such as copper, iron, aluminum, steel, aluminum alloy, etc.

Exemplarily, in FIG. 3, the casing 21 is in a hollow structure with openings 211 at the two opposite sides. The battery cell 20 includes two end cover assemblies 23, and one end cover assembly 23 correspondingly covers one opening 211 of the casing 21 to form sealed connection, so as to form a sealed space for accommodating the electrode assembly 22 and the electrolyte. When assembling the battery cell 20, the electrode assembly 22 may be placed in the casing 21 first, then one end cover assembly 23 covers one opening 211 of the casing 21, the electrolyte is filled into the casing 21, and then the other end cover assembly 23 covers the other opening 211 of the casing 21 to complete the assembly of the battery cell 20.

It can be understood that the battery cell 20 is not limited to the above structure only. The battery cell 20 may also be of other structure. For example, the casing 21 is a hollow structure with an opening 211 at one side, and the end cover assembly 23 covers the opening 211 of the casing 21 to form sealed connection so as to form a sealed space for accommodating the electrode assembly 22 and the electrolyte.

The casing 21 may be in various shapes, such as a cylinder, a cuboid and so on. The shape of the casing 21 may be determined by the specific shape of the electrode assembly 22. For example, if the electrode assembly 22 is in a cylinder structure, the casing 21 may be selected to be in a cylinder structure; and if the electrode assembly 22 is in a cuboid structure, the casing 21 may be selected to be in a cuboid structure. Certainly, the end cover assembly 23 may be in various structures. The shape of the end cover assembly 23 may be adapted to the shape of the casing 21. For example, the end cover assembly 23 is in a plate-like structure, a hollow structure with an opening 211 at one end, etc. Exemplarily, in FIG. 3, the electrode assembly 22 is in a cylinder structure, then the casing 21 is in a cylinder structure, and the end cover assembly 23 covers the opening 211 of the casing 21.

In the above, the end cover assembly 23 is a component that covers the opening 211 of the casing 21 to isolate the internal environment of the battery cell 20 from the external environment.

It should be indicated that the electrode assembly 22 is a component in the battery cell 20 where electrochemical reactions occur. The electrode assembly 22 may include a positive electrode plate, a negative electrode plate and a separator. The electrode assembly 22 may be in a wound structure formed by winding the positive electrode plate, the separator and the negative electrode plate, or may be in a laminated structure formed by stacking the positive electrode plate, the separator and the negative electrode plate. Exemplarily, in FIG. 3, the electrode assembly 22 is a wound structure formed by winding the positive electrode plate, the separator and the negative electrode plate.

Referring to FIG. 3, tabs 221 are formed at two ends of the electrode assembly 22 respectively. That is, each end of the electrode assembly 22 facing the end cover assembly 23 is provided with a tab 221. The tab 221 is used to be electrically connected with the end cover assembly 23 to realize the electrical connection between the electrode assembly 22 and the end cover assembly 23, so as to realize input of electric energy into the battery cell 20 and output of the electric energy from the battery cell. In the above, two tabs 221 are used to lead out the positive electrode and negative electrode of the electrode assembly 22 respectively, and correspondingly, the two end cover assemblies 23 are also used as the positive output electrode and the negative output electrode of the battery cell 20, respectively. It should be noted that the tab 221 of the electrode assembly 22 may be directly connected to the end cover assembly 23. For example, the tab 221 is connected to the end cover assembly 23 by welding or abutment. Of course, the tab 221 of the electrode assembly 22 may also be indirectly connected to the end cover assembly 23. For example, the tab 221 is connected to other component and then is welded to or abuts against the end cover assembly 23.

Optionally, there may be one or more electrode assemblies 22 accommodated in the casing 21. Exemplarily, in FIG. 3, there is one electrode assembly 22.

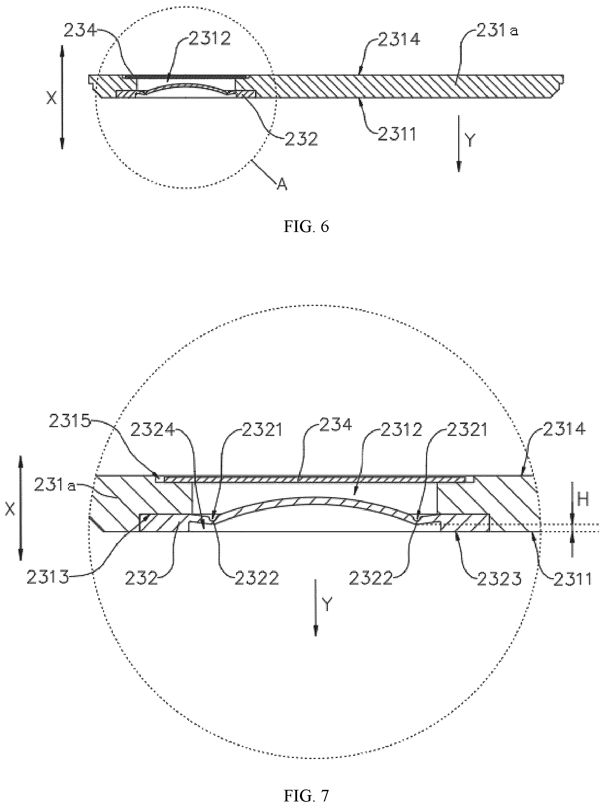

According to some embodiments of the present application, referring to FIG. 3 and FIG. 4, and further referring to FIG. 5, FIG. 6 and FIG. 7, FIG. 5 is a structural exploded view of an end cover assembly 23 provided by some embodiments of the present application; FIG. 6 is a sectional view of a pressure relief member 232 being connected to a first wall 231a, provided by some embodiments of the present application; and FIG. 7 is a local enlarged view of part A in FIG. 6 where the pressure relief member 232 is connected to the first wall 231a. The present application provides a battery cell 20, where the battery cell 20 includes a housing and a pressure relief member 232. The housing includes a first wall 231a, the first wall 231a including a first side surface 2311 facing the interior of the battery cell 20, and the housing is used to accommodate the electrode assembly 22. The pressure relief member 232 is provided on the first wall 231a. In the above, the pressure relief member 232 includes a weak structure, where in the thickness direction X of the first wall, the weak structure does not extend beyond the first side surface 2311 in a direction facing the interior of the battery cell 20.

In the above, in the thickness direction X of the first wall, the direction of the weak structure facing the interior of the battery cell 20 is the first direction Y shown in FIG. 6 and FIG. 7, the first direction Y is parallel to the thickness direction X of the first wall, and the first direction Y is unidirectional.

In FIG. 3, the housing is composed of the casing 21 and the end cover assemblies 23 together. The end cover 231 of the end cover assembly 23 serves to cover the opening 211 of the casing 21, so that the end cover 231 and the casing 21 form a sealed space for accommodating the electrode assembly 22 and the electrolyte. The end cover 231 may be made of a variety of materials, such as copper, iron, aluminum, steel, aluminum alloy, etc.

Exemplarily, in FIG. 6 and FIG. 7, the first wall 231a is an end cover 231, and certainly, in other embodiments, the first wall 231a may also be a casing 21.

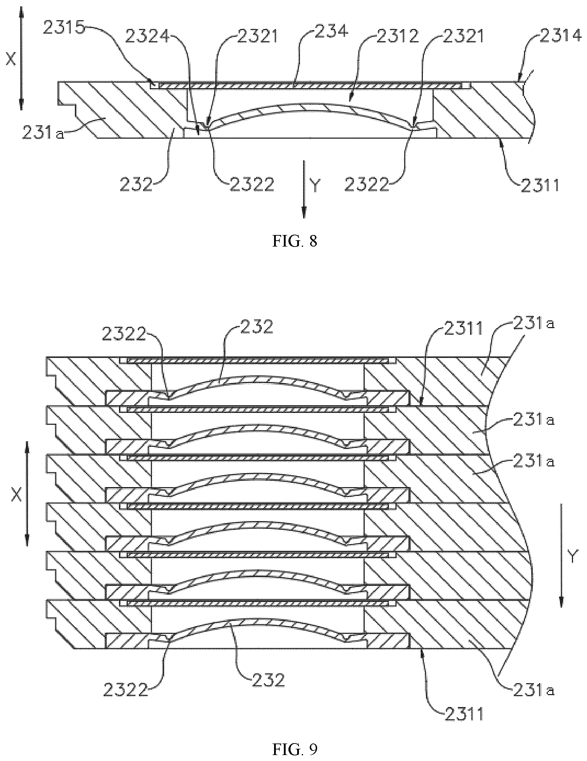

Optionally, the pressure relief member 232 and the first wall 231a may be of an integrally formed structure, or the pressure relief member 232 and the first wall 231a may be of a split structure, and the pressure relief member 232 is connected to the first wall 231a. Exemplarily, in FIG. 6 and FIG. 7, the pressure relief member 232 and the first wall 231a are of a split structure, the first wall 231a is provided with a pressure relief hole 2312, and the pressure relief member 232 covers the pressure relief hole 2312. The pressure relief member 232 may be connected with the first wall 231a in various ways, such as bonding, welding or snapping. In some embodiments, referring to FIG. 8, FIG. 8 is a local sectional view of a pressure relief member 232 being connected to a first wall 231a, provided by yet some embodiments of the present application, where the pressure relief member 232 and the first wall 231a are of an integral structure, that is, the first wall 231a is provided with a region having a weak structure, with the region being formed by stamping, casting or other process, and the region is the pressure relief member 232.

The pressure relief member 232 plays a role in releasing the internal pressure of the battery cell 20 when the battery cell 20 experiences thermal runaway. That is, the pressure relief member 232 can be broken along the weak structure when the battery cell 20 experiences thermal runaway, so as to release the internal pressure of the battery cell 20. The pressure relief member 232 may be of various structures. For example, if the pressure relief member 232 and the first wall 231a are of an integrally formed structure, that is, the pressure relief member 232 is a weak region formed on the first wall 231a; and if the pressure relief member 232 and the first wall 231a are of a split structure, the pressure relief member 232 may be a component such as an explosion-proof valve, explosion-proof disc, air valve, pressure relief valve or safety valve.

In the above, the weak structure of the pressure relief member 232 is configured to be broken when the battery cell 20 experiences thermal runaway to release the internal pressure of the battery cell 20. The weak structure of the pressure relief member 232 may be in various forms, for example, a region of the pressure relief member 232 where an indentation is provided, or a thinned region of the pressure relief member 232.

Exemplarily, in FIG. 7, a thinned region (i.e., a region where the thickness is reduced) is formed on the pressure relief member 232, and an indented groove 2321 is provided at the thinned region, so that the pressure relief member 232 is provided with a relatively weak region at the region where the indented groove 2321 is provided, that is, the region of the pressure relief member 232 where the indented groove 2321 is provided is the weak structure of the pressure relief member 232, such that the pressure relief member 232 is configured to be broken along the indented groove 2321 when the internal pressure or temperature of the battery cell 20 reaches a threshold value, so as to release the internal pressure of the battery cell 20. Of course, in other embodiments, it is necessary to provide only a thinned region or only an indented groove 2321 on the pressure relief member 232.

The pressure relief hole 2312 on the first wall 231a is a channel for discharging the emissions generated inside the battery cell 20 when the battery cell 20 undergoes thermal runaway. When the pressure relief member 232 is releasing the internal pressure of the battery cell 20, the pressure relief hole 2312 can communicate with both the interior of the battery cell 20 and the external environment, so that the emissions generated inside the battery cell 20 can be discharged through the pressure relief hole 2312.

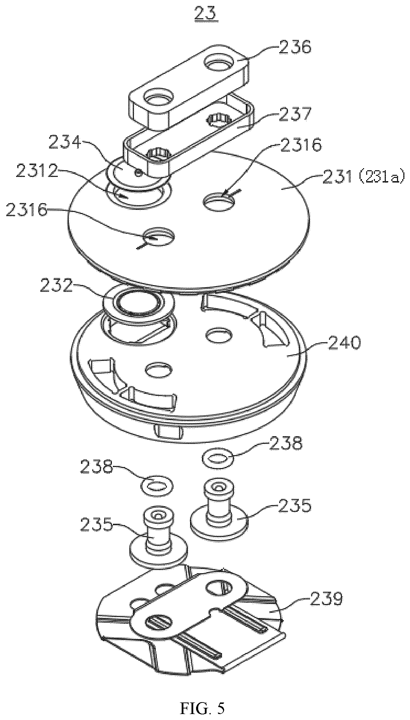

The first side surface 2311 of the first wall 231a is the surface of the first wall 231a facing the interior of the battery cell 20. For example, in FIG. 5 and FIG. 6, the first wall 231a is the end cover 231, that is, the first side surface 2311 is the lower surface of the end cover 231 facing the electrode assembly 22 in the first direction Y.

In the thickness direction X of the first wall, the weak structure does not extend beyond the first side surface 2311 in the direction facing the interior of the battery cell 20. That is, the pressure relief member 232 is installed on the first wall 231a, and in the thickness direction X of the first wall and in the direction of the first side surface 2311 facing the interior of the battery cell 20, i.e. in the first direction Y, the region, having the weak structure, of the pressure relief member 232 does not extend beyond the first side surface 2311. Exemplarily, in FIG. 7, the weak structure is a region of the pressure relief member 232 where the indented groove 2321 is provided, that is, the region of the pressure relief member 232 where the indented groove 2321 is provided does not extend beyond the first side surface 2311 in the first direction Y.

It should be indicated that the pressure relief member 232 may be mounted on the first wall 231a through various structures. For example, in FIG. 7, the first side surface 2311 of the first wall 231a may be provided with an accommodation groove 2313, the pressure relief hole 2312 communicates with the interior of the battery cell 20 through the accommodation groove 2313, and the pressure relief member 232 is accommodated inside the accommodation groove 2313 and covers the pressure relief hole 2312, so that the weak structure of the pressure relief member 232 does not extend beyond the first side surface 2311 in the first direction Y. Of course, in other embodiments, the first wall 231a may also be of other structures. For example, it may also be that a recessed region is formed in the edge region of the first side surface 2311 of the first wall 231a, the pressure relief hole 2312 runs through the surface of the recessed region, and the pressure relief member 232 is installed in the recessed region of the first side surface 2311, so that the weak structure of the pressure relief member 232 does not extend beyond the first side surface 2311 in the first direction Y. It may also be that the pressure relief member 232 is assembled in the pressure relief hole 2312 and block the pressure relief hole 2312, and the pressure relief hole 2312 runs through the first side surface 2311 of the first wall 231a, so as to make the weak structure of the pressure relief member 232 not extend beyond the first side surface 2311 in the first direction Y.

The pressure relief member 232 is provided on the first wall 231a, and the pressure relief member 232 is provided with a weak structure, so that the pressure relief member 232 can release the internal pressure of the battery cell 20 when an abnormality occurs in the battery cell 20, so as to reduce the risk of explosion of the battery cell 20. The weak structure of the pressure relief member 232 is provided not to extend beyond the first side surface 2311 of the first wall 231a in the thickness direction X of the first wall, such that the weak structure of the pressure relief member 232 does not extend beyond the first side surface 2311 in the thickness direction X of the first wall, so as to better protect the portion, having the weak structure, of the pressure relief member 232, so that during the production and assembly processes of the battery cell 20 or during the processes of multiple first walls 231a being stacked with one over another, stored and transported (referring to FIG. 9, FIG. 9 is a schematic structural diagram of multiple first walls 231a being stacked with one over another after the pressure relief member 232 is connected to the first wall 231, provided by some embodiments of the present application), the phenomenon that the wear or damage occurs due to that the weak structure of the pressure relief member 232 protrudes from the first side surfaces 2311 is alleviated, which on the one hand, can effectively extend the use duration of the pressure relief member 232, facilitating prolonging the service life of the battery cell 20 with such pressure relief member 232, and on the other hand, can alleviate the phenomenon that the weak structure of the pressure relief member 232 has weakened structural strength due to wear, facilitating the use reliability of the pressure relief member 232 to ensure the normal use of the pressure relief member 232, and can further effectively reduce the risk of premature valve opening of the pressure relief member 232 to improve the use safety of battery cell 20 with such pressure relief member 232.

In some embodiments, as shown in FIGS. 6 and 7, the weak structure is the region of the pressure relief member 232 where the indented groove 2321 is provided. The indented groove 2321 is provided on a side of the pressure relief member 232 facing away from the interior of the battery cell 20, and the pressure relief member 232 is provided with a protrusion 2322 on a side facing the interior of the battery cell 20 at a position corresponding to the intended groove 2321, and the protrusion 2322 does not extend beyond the first side surface 2311 in a direction facing the interior of the battery cell 20 (i.e., first direction Y).

In the above, the protrusion 2322 does not extend beyond the first side surface 2311 in the direction facing the interior of the battery cell 20, that is, the protrusion 2322 does not extend beyond the first side surface 2311 in the direction from the first side surface 2311 to the interior of the battery cell 20, in the thickness direction X of the first wall. That is, the protrusion 2322 does not extend beyond the first side surface 2311 in the first direction Y, so that the entire protrusion 2322 is located in the accommodation groove 2313 provided on the first wall 231a.

By providing an indented groove 2321 at one side of the pressure relief member 232 facing away from the interior of the battery cell 20, and forming a protrusion 2322 on the other side of the pressure relief member 232 corresponding to the indented groove 2321, the region of the pressure relief member 232 where the indented groove 2321 is provided is a weak structure used to release the internal pressure of the battery cell 20. Such structure is simple and facilitates the pressure relief member 232 to stably open the valve when an abnormality occurs in the battery cell 20. In addition, by providing the protrusion 2322 on the side of the pressure relief member 232 facing away from the indented groove 2321 to not extend beyond the first side surface 2311 of the end cover 231 in the first direction Y, the protrusion 2322 of the pressure relief member 232 does not extend beyond the first side surface 2311 in the thickness direction X of the first wall, so as to better protect the portion of the pressure relief member 232 where the indented groove 2321 is provided, so as to alleviate the phenomenon that the protrusion 2322 of the pressure relief member 232 is worn or damaged during the production and assembly processes of the battery cell 20.

According to some embodiments of the present application, referring to FIG. 7, in the thickness direction X of the first wall, the distance between the protrusion 2322 and the first side surface 2311 is H, satisfying H>0 mm.

In the above, H>0mm, that is, there is a gap existing between the protrusion 2322 and the first side surface 2311 in the thickness direction X of the first wall. Exemplarily, the distance between the protrusion 2322 and the first side surface 2311 in the thickness direction X of the first wall may be 0.01mm, 0.02mm, 0.05mm, 0.08mm, 0.1mm, 0.11mm or 0.12mm or the like.

The distance between the protrusion 2322 and the first side surface 2311 in the thickness direction X of the first wall is set to be greater than 0, and the battery cell 20 using such structure can further alleviate the phenomenon of wear or damage of the protrusion 2322 during the production and assembly processes of the battery cell 20, which is conducive to ensuring the use reliability and use stability of the pressure relief member 232.

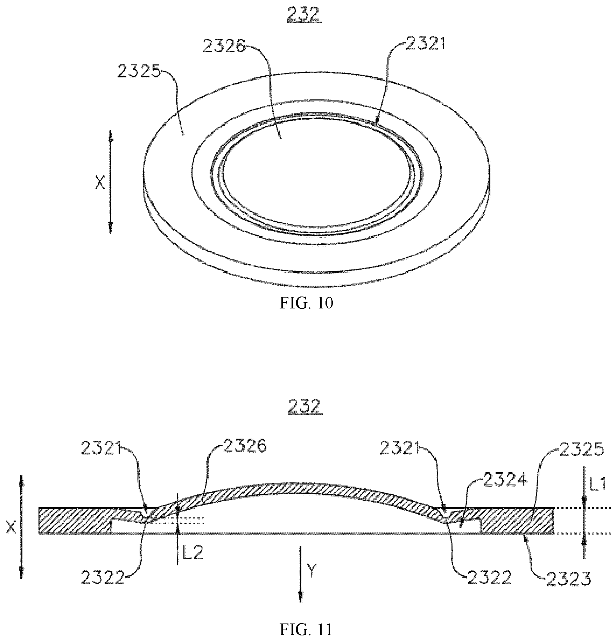

According to some embodiments of the present application, referring to FIG. 6 and FIG. 7, and further referring to FIG. 10 and FIG. 11, FIG. 10 is a schematic structural diagram of a pressure relief member 232 provided by some embodiments of the present application; and FIG. 11 is a sectional view of a pressure relief member 232 provided by some embodiments of the present application. The pressure relief member 232 includes a first surface 2323 facing the interior of the battery cell 20, the first surface 2323 is provided with a groove 2324, and at least a part of the protrusion 2322 is accommodated in the groove 2324.

In the above, the pressure relief member 232 includes a first surface 2323 facing the interior of the battery cell 20. The first surface 2323 is the surface, closest to the interior of the battery cell 20, among the multiple surfaces of the pressure relief member 232 facing the interior of the battery cell 20 in the thickness direction X of the first wall. That is, the first surface 2323 is the surface of the pressure relief member 232 closest to the electrode assembly 22 in the first direction Y.

At least a part of the protrusion 2322 is accommodated in the groove 2324, that is, the protrusion 2322 may be entirely located in the groove 2324 provided on the first surface 2323, or may be partially located in the groove 2324 provided on the first surface 2323. That is, the protrusion 2322 may extend out of the groove 2324 in the thickness direction X of the first wall. Exemplarily, in FIG. 11, the protrusion 2322 is entirely located in the groove 2324 provided on the first surface 2323.

By providing a groove 2324 on the first surface 2323 of the pressure relief member 232 facing the interior of the battery cell 20, at least a part of the protrusion 2322 is accommodated in the groove 2324, so as to further better protect the protrusion 2322, to alleviate the phenomenon that the protrusion 2322 of the pressure relief member 232 is worn or damaged during the manufacturing and forming or when the pressure relief member 232 is assembled with the first wall 231a, thus facilitating prolonging the service life and improving the use stability of the pressure relief member 232.

According to some embodiments of the present application, referring to FIG. 7 and FIG. 11, in the thickness direction X of the first wall, the protrusion 2322 does not extend beyond the first surface 2323.

In the above, the protrusion 2322 does not extend beyond the first surface 2323, that is, the protrusion 2322 is entirely accommodated in the groove 2324 provided on the first surface 2323. That is to say, in the first direction Y, the protrusion 2322 does not extend beyond the first surface 2323.

By making the protrusion 2322 not extend beyond the first surface 2323 in the thickness direction X of the first wall, for the pressure relief member 232 adopting such structure, on the one hand, it facilitates improving the protection effect on the protrusion 2322, to reduce the risk of the protrusion 2322 being worn or damaged, and on the other hand, during the processes of multiple pressure relief members 232 being stacked with one over another, stored or transported, the influence of interference between the pressure relief members 232 can be reduced, thereby facilitating stacking of the pressure relief members 232 and saving space occupied.

In some embodiments, the first surface 2323 is coplanar with the first side surface 2311. Alternatively, in the thickness direction X of the first wall, the first surface 2323 is further away from the interior of the battery cell 20 than the first side surface 2311.

Exemplarily, in FIG. 7, the first surface 2323 is coplanar with the first side surface 2311, that is, the first surface 2323 and the first side surface 2311 are flush with each other. Certainly, in other embodiments, the first surface 2323 may also be provided further away from the interior of the battery cell 20 than the first side surface 2311 in the thickness direction X of the first wall. That is, the first surface 2323 retracts into the accommodation groove 2313 of the first wall 231a.

By providing the first surface 2323 of the pressure relief member 232 to be coplanar with the first side surface 2311 or further away from the interior of the battery cell 20 than the first side surface 2311, it can be achieved that the protrusion 2322 accommodated in the groove 2324 of the pressure relief member 232 does not extend beyond the first side surface 2311 in the thickness direction X of the first wall, enabling simple structure and convenient and easy manufacturing and assembling.

According to some embodiments of the present application, as shown in FIGS. 10 and 11, the pressure relief member 232 includes an installation part 2325 and a pressure relief part 2326. The pressure relief part 2326 is provided with an indented groove 2321, and a protrusion 2322 is formed on the side of the pressure relief part 2326 facing the interior of the battery cell 20 at a position corresponding to the indented groove 2321. The installation part 2325 is connected to the first wall 231a, and the installation part 2325 is provided surrounding the pressure relief part 2326. The thickness of the installation part 2325 is larger than the thickness of the pressure relief part 2326, and the installation part 2325 encloses the pressure relief part 2326 to form the groove 2324.

In the above, the installation part 2325 is provided surrounding the pressure relief part 2326, that is, the installation part 2325 is of an annular structure and surrounds the outside of the pressure relief part 2326.

The thickness of the installation part 2325 is larger than the thickness of the pressure relief part 2326, and the installation part 2325 encloses the pressure relief part 2326 to form the groove 2324. That is, the installation part 2325 and the pressure relief part 2326 together define the groove 2324, and the installation part 2325 includes the first surface 2323, i.e., the surface of the installation part 2325 facing the interior of the battery cell 20 in the first direction Y is the first surface 2323.

The pressure relief member 232 is composed of a pressure relief part 2326 and an installation part 2325 surrounding the outside of the pressure relief part 2326, and the thickness of the installation part 2325 is set to be greater than the thickness of the pressure relief part 2326. Such structure is used, so that on the one hand, it facilitates the pressure relief member 232 being connected to the first wall 231a through the installation part 2325 to improve the connection strength between the pressure relief member 232 and the first wall 231a, and on the other hand, the installation part 2325 encloses the pressure relief part 2326 to form a groove 2324 for accommodating the protrusion 2322. This structure is simple and facilitates protecting the protrusion 2322.

In some embodiments, as shown in FIG. 11, the thickness of the installation part 2325 is L₁, satisfying 0.1mm≤L₁≤0.4mm.

In the above, if the installation part 2325 is of a flat-plate structure, the thickness of the installation part 2325 is L₁, that is, the maximum dimension of the installation part 2325 in the thickness direction X of the first wall is L₁. If the installation part 2325 is of an arc structure, the thickness of the installation part 2325 is the maximum dimension of the installation part 2325 in the direction of its curvature radius.

Optionally, the thickness L₁ of the installation part 2325 may be 0.1mm, 0.2mm, 0.25mm, 0.3mm, 0.35mm or 0.4mm, etc.

By setting the thickness of the installation part 2325 of the pressure relief member 232 to be 0.1 mm to 0.4 mm, on the one hand, the phenomenon of insufficient connection strength between the installation part 2325 and the first wall 231a caused by too small thickness of the installation part 2325 can be alleviated, and on the other hand, the phenomenon that the installation part 2325 occupies too much space due to too large thickness of the installation part 2325 can be alleviated.

In some embodiments, continuing to refer to FIG. 11, the minimum thickness of the pressure relief part 2326 at the position thereof where the indented groove 2321 is provided is L₂, satisfying 0.03mm≤L₂≤0.15mm.

In the above, the minimum thickness of the pressure relief part 2326 at the position thereof where the indented groove 2321 is provided is L₂, that is, the dimension of the residual portion of the pressure relief part 2326 at the position where the indented groove 2321 is provided is L₂. In FIG. 11, since the pressure relief part 2326 is of an arc structure, the minimum thickness of the pressure relief part 2326 at the position thereof where the indented groove 2321 is provided is the minimum dimension of the pressure relief part 2326 at the position where the indented groove 2321 is provided, in the direction of its curvature radius of the pressure relief part 2326.

Further, 0.04mm≤L₂≤0.1mm, that is, the minimum thickness L₂ of the pressure relief part 2326 at the position thereof where the indented groove 2321 is provided is 0.04mm to 0.1mm. Exemplarily, the minimum thickness L₂ of the pressure relief part 2326 at the position thereof where the indented groove 2321 is provided may be 0.04mm, 0.05mm, 0.06mm, 0.08mm or 0.1mm, etc.

The minimum thickness of the pressure relief part 2326 at the position thereof where the indented groove 2321 is provided is set to be 0.03mm to 0.15mm, that is, the pressure relief member 232 adopting this structure can, on the one hand, alleviate the phenomenon that the pressure relief member 232 is easily damaged due to too small minimum thickness of the pressure relief part 2326 at the position thereof where the indented groove 2321 is provided, and on the other hand, can alleviate the phenomenon that the valve opening pressure required for the pressure relief part 2326 is too large due to too large minimum thickness of the pressure relief part 2326 at the position thereof where the indented groove 2321 is provided, thus facilitating reducing the use risk of the battery cell 20.

According to some embodiments of the present application, referring to FIG. 10 and FIG. 11, the indented groove 2321 is an annular groove, and in the thickness direction X of the first wall, the region of the pressure relief part 2326 located inside the indented groove 2321 is arched in a direction away from the interior of the battery cell 20.

In the above, the indented groove 2321 may be an annular groove, i.e., the indented groove 2321 is of a structure in which a head and a tail in the extension direction thereof are connected to each other. Certainly, the indented groove 2321 may also be an unclosed annular groove.

The region of the pressure relief part 2326 located inside the indented groove 2321 is arched in a direction away from the interior of the battery cell 20, that is, the region of the pressure relief part 2326 located inside the indented groove 2321 is arched towards outside of the battery cell 20 in the thickness direction X of the first wall. That is, the region of the pressure relief part 2326 located inside the indented groove 2321 is arched in the direction away from the first direction Y.

By providing the indented groove 2321 to be in an annular structure, and providing the region of the pressure relief part 2326 located inside the indented groove 2321 to be in an arched shape, for the pressure relief member 232 adopting this structure, the indented groove 2321 can be easily provided on the pressure relief part 2326, to reduce the difficulty in processing the indented groove 2321.

In some embodiments, referring to FIG. 10, the pressure relief member 232 is of a circular structure. Certainly, in other embodiments, the pressure relief member 232 may also be of a rectangular structure, an oval structure or a triangular structure, etc.

By providing the pressure relief member 232 to be of a circular structure, it is easy to assemble the pressure relief member 232 to the first wall 213a, facilitating reducing the difficulty in assembling and processing.

According to some embodiments of the present application, referring to what is shown in FIG. 5, the pressure relief member 232 and the first wall 231a are of a split structure, the first wall 231a is provided with a pressure relief hole 2312, and the pressure relief member 232 covers the pressure relief hole 2312.

In the above, the pressure relief member 232 and the first wall 231a are of a split structure, that is, the pressure relief member 232 and the first wall 231a are components independent from each other, and the pressure relief member 232 is connected to the first wall 231a by welding, bonding or snapping, etc.

By providing the pressure relief member 232 and the first wall 231a to be of a split structure, and providing a pressure relief hole 2312 on the first wall 231a, the pressure relief member 232 covers the pressure relief hole 2312, so as to achieve the function of the pressure relief member 232 releasing the internal pressure of the battery cell 20. By using such structure, it is easy to provide and install the pressure relief member 232 on the first wall 231a, facilitating reducing the difficulty of assembly and facilitating the later repair and replacement of the pressure relief member 232.

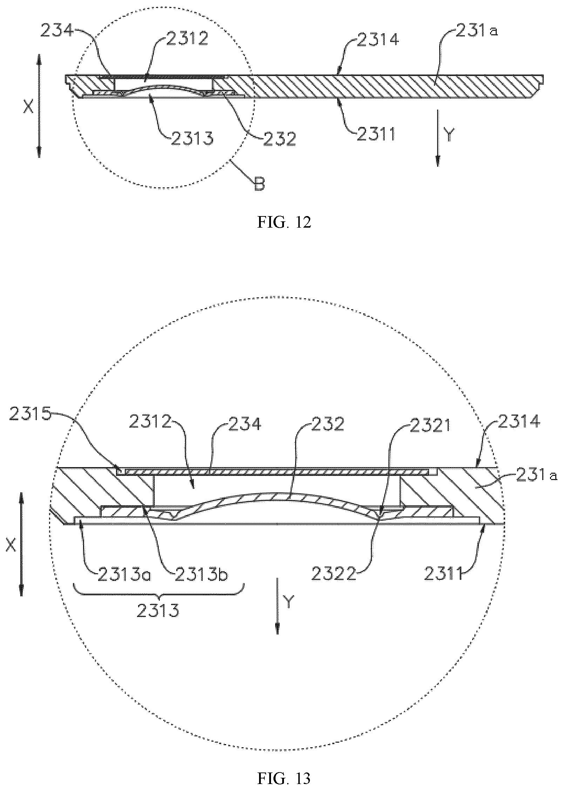

According to some embodiments of the present application, referring to FIG. 12 and FIG. 13, FIG. 12 is a sectional view of a pressure relief member 232 being connected to a first wall 231a, provided by still some embodiments of the present application; and FIG. 13 is a local enlarged view of part B in FIG. 12 where the pressure relief member 232 is connected to the first wall 231a. The first side surface 2311 is provided with an accommodation groove 2313, the pressure relief hole 2312 runs through the groove bottom surface of the accommodation groove 2313, and the accommodation groove 2313 is used to accommodate at least a part of the pressure relief member 232.

In the above, the first side surface 2311 is provided with an accommodation groove 2313, that is, the accommodation groove 2313 is provided on the first side surface 2311 of the first wall 231a facing the interior of the battery cell 20, and the pressure relief hole 2312 can communicate with the interior of the battery cell 20 through the accommodation groove 2313.

The accommodation groove 2313 is used to accommodate at least a part of the pressure relief member 232, that is, the pressure relief member 232 can be entirely accommodated in the accommodation groove 2313, or can be partially accommodated in the accommodation groove 2313. Exemplarily, in FIG.13, a part of the pressure relief member 232 extends into the pressure relief hole 2312, and other part of the pressure relief member 232 is accommodated in the accommodation groove 2313, so as to realize that the protrusion 2322 of the pressure relief member 232 does not extend beyond the first side surface 2311 in the thickness direction X of the first wall. That is, the protrusion 2322 of the pressure relief member 232 does not extend beyond the first side surface 2311 in the first direction Y.

By providing an accommodation groove 2313 on the first side surface 2311 of the first wall 231a, the pressure relief member 232 can be accommodated in the accommodation groove 2313, thus by using this structure, it is realized that the protrusion 2322 of the pressure relief member 232 does not extend beyond the first side surface 2311 of the firs wall 231a in the thickness direction X of the first wall, enabling simple structure and making it easy to implement.

In some embodiments, continuing to refer to FIGS. 12 and 13, the accommodation groove 2313 includes a first groove 2313a and a second groove 2313b. The second groove 2313b is provided on the groove bottom surface of the first groove 2313a, and the pressure relief hole 2312 runs through the groove bottom surface of the second groove 2313b. The pressure relief member 232 is installed in the second groove 2313b and abuts against the groove bottom surface of the second groove 2313b. The protrusion 2322 is accommodated in the first groove 2313a.

In the above, the second groove 2313b is provided on the groove bottom surface of the first groove 2313a, and the pressure relief hole 2312 runs through the groove bottom surface of the second groove 2313b. That is, the pressure relief hole 2312 communicates with the first groove 2313a through the second groove 2313b. In other words, the accommodation groove 2313 is a stepped groove structure provided on the first side surface 2311, and in the thickness direction X of the first wall, the first groove 2313a is closer to the interior of the battery cell 20 than the second groove 2313b, so that the second groove 2313b is provided on the groove bottom surface of the first groove 2313a, and the pressure relief hole 2312 runs through the groove bottom surface of the second groove 2313b, that is, the second groove 2313b and the first groove 2313a are arranged in the first direction Y.

The pressure relief member 232 is installed in the second groove 2313b and abuts against the groove bottom surface of the second groove 2313b. That is, the pressure relief member 232 is connected to the groove bottom surface or groove side surface of the second groove 2313b, so that the pressure relief member 232 is installed in the second groove 2313b, and the pressure relief member 232 and the groove bottom surface of the second groove 2313b abut against each other.

The protrusion 2322 is accommodated in the first groove 2313a, that is, the protrusion 2322 extends out of the second groove 2313b in the thickness direction X of the first wall, and accommodated in the first groove 2313a, to realize that the protrusion 2322 does not extend beyond the first side surface 2311 in the thickness direction X of the first wall.

It should be noted that in an embodiment in which the accommodation groove 2313 is provided on the first side surface 2311 and the accommodation groove 2313 is provided with a stepped groove structure formed by the first groove 2313a and the second groove 2313b, the first surface 2323 of the pressure relief member 232 facing the interior of the battery cell 20 may be a structure provided with a groove 2324, or the first surface 2323 of the pressure relief member 232 facing the interior of the battery cell 20 may also be a structure not provided with the groove 2324, i.e., the protrusion 2322 protrudes out from the surface of the pressure relief member 232 facing the interior of the battery cell 20. Exemplarily, in FIG. 13, the pressure relief member 232 is a structure in which the first surface 2323 is not provided with the groove 2324.

The accommodation groove 2313 includes a first groove 2313a and a second groove 2313b provided sequentially in the thickness direction X of the first wall, the second groove 2313b is provided on the groove bottom surface of the first groove 2313a, and the pressure relief hole 2313 runs through the groove bottom surface of the second groove 2313b. That is, in the thickness direction X of the first wall, the second groove 2313b is provided between the first groove 2313a and the pressure relief hole 2312, so that the pressure relief member 232 is installed in the second groove 2313b and the protrusion 2322 of the pressure relief member 232 is accommodated in the first groove 2313a, to realize that the protrusion 2322 does not extend beyond the first side surface 2311 of the first wall 231a in the thickness direction X of the first wall. This structure is simple and easy to assemble.

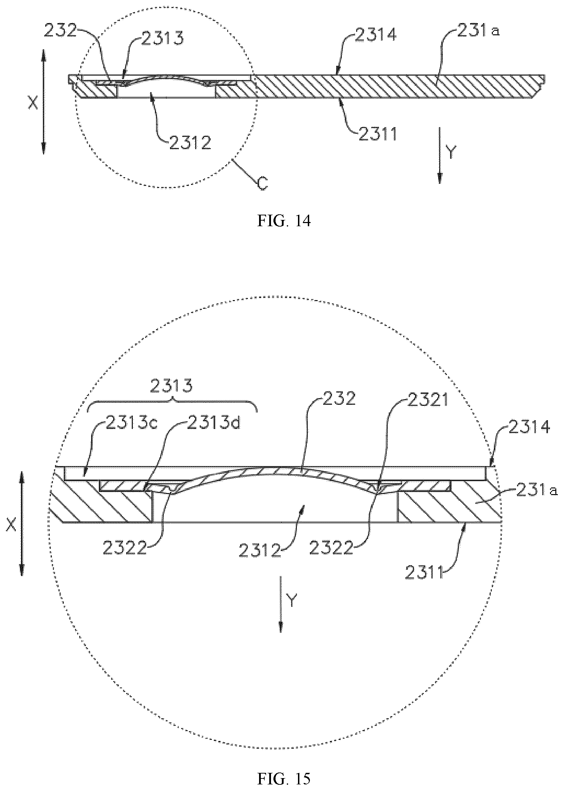

According to some embodiments of the present application, referring to FIG. 14 and FIG. 15, FIG. 14 is a sectional view of a pressure relief member 232 being connected to a first wall 231a, provided by yet still some embodiments of the present application; and FIG. 15 is a local enlarged view of part C in FIG. 14 where the pressure relief member 232 is connected to the first wall 231a. In the thickness direction X of the first wall, the first wall 231a includes a second side surface 2314 provided opposite to the first side surface 2311, the second side surface 2314 is provided with an accommodation groove 2313, the pressure relief hole 2312 runs through the groove bottom surface of the accommodation groove 2313, and the accommodation groove 2313 is used to accommodate at least a part of the pressure relief member 232.

In the above, the second side surface 2314 is provided with an accommodation groove 2313, that is, the accommodation groove 2313 is provided on the second side surface 2314 of the first wall 231a facing away from the interior of the battery cell 20, the pressure relief hole 2312 communicates with the external environment through the accommodation groove 2313, and the pressure relief hole 2312 runs through the first side surface 2311.

The accommodation groove 2313 is used to accommodate at least a part of the pressure relief member 232, that is, the pressure relief member 232 can be entirely accommodated in the accommodation groove 2313, or can be partially accommodated in the accommodation groove 2313. Exemplarily, in FIG.15, a part of the pressure relief member 232 extends into the pressure relief hole 2312, and other part of the pressure relief member 232 is accommodated in the accommodation groove 2313, so as to realize that the protrusion 2322 of the pressure relief member 232 does not extend beyond the first side surface 2311 in the thickness direction X of the first wall. That is, the protrusion 2322 of the pressure relief member 232 does not extend beyond the first side surface 2311 in the first direction Y.

By providing an accommodation groove 2313 on the second side surface 2314 of the first wall 231a facing away from the first side surface 2311, the pressure relief member 232 can be accommodated in the accommodation groove 2313, so as to install the pressure relief member 232 on the side of the first wall 231a facing away from the interior of the battery cell 20, thus by using this structure, it is realized that the protrusion 2322 of the pressure relief member 232 does not extend beyond the first side surface 2311 of the end cover 231 in the thickness direction X of the first wall, enabling simple structure and making it easy to implement.

In some embodiments, continuing to refer to FIGS. 14 and 15, the accommodation groove 2313 includes a third groove 2313c and a fourth groove 2313d. The fourth groove 2313d is provided on the groove bottom surface of the third groove 2313c, and the pressure relief hole 2312 runs through the groove bottom surface of the fourth groove 2313d. The pressure relief member 232 is installed in the fourth groove 2313d and abuts against the groove bottom surface of the fourth groove 2313d. The protrusion 2322 is accommodated in the pressure relief hole 2312.

In the above, the fourth groove 2313d is provided on the groove bottom surface of the third groove 2313c, and the pressure relief hole 2312 runs through the groove bottom surface of the fourth groove 2313d. That is, the pressure relief hole 2312 communicates with the third groove 2313c through the fourth groove 2313d. In other words, the accommodation groove 2313 is a stepped groove structure provided on the second side surface 2314, and in the thickness direction X of the first wall, the third groove 2313c is further away from the interior of the battery cell 20 than the fourth groove 2313d, so that the fourth groove 2313d is provided on the groove bottom surface of the third groove 2313c, and the pressure relief hole 2312 runs through the groove bottom surface of the fourth groove 2313d, that is, the third groove 2313c and the fourth groove 2313d are arranged in the first direction Y.

The pressure relief member 232 is installed in the fourth groove 2313d and abuts against the groove bottom surface of the fourth groove 2313d. That is, the pressure relief member 232 is connected to the groove bottom surface or groove side surface of the fourth groove 2313d, so that the pressure relief member 232 is installed in the fourth groove 2313d, and the pressure relief member 232 and the groove bottom surface of the fourth groove 2313d abut against each other.

The protrusion 2322 is accommodated in the pressure relief hole 2313, that is, the protrusion 2322 extends out of the groove bottom surface of the fourth groove 2313d in the thickness direction X of the first wall, and accommodated in the pressure relief hole 2313, to realize that the protrusion 2322 does not extend beyond the first side surface 2311 in the thickness direction X of the first wall, i.e., realize that the protrusion 2322 does not extend beyond the first side surface 2311 in the first direction Y.

It should be noted that in an embodiment in which the accommodation groove 2313 is provided on the second side surface 2314 and the accommodation groove 2313 is provided with a stepped groove structure formed by the third groove 2313c and the fourth groove 2313d, the first surface 2323 of the pressure relief member 232 facing the interior of the battery cell 20 may be a structure provided with a groove 2324, or the first surface 2323 of the pressure relief member 232 facing the interior of the battery cell 20 may also be a structure not provided with the groove 2324, i.e., the protrusion 2322 protrudes out from the surface of the pressure relief member 232 facing the interior of the battery cell 20. Exemplarily, in FIG. 15, the pressure relief member 232 is a structure in which the first surface 2323 is not provided with the groove 2324.

The accommodation groove 2313 includes a third groove 2313c and a fourth groove 2313d provided sequentially in the thickness direction X of the first wall, the fourth groove 2313d is provided on the groove bottom surface of the third groove 2313c, and the pressure relief hole 2312 runs through the groove bottom surface of the fourth groove 2313d. That is, in the thickness direction X of the first wall, the fourth groove 2313d is provided between the third groove 2313c and the pressure relief hole 2312, so that the pressure relief member 232 is installed in the fourth groove 2313d and the protrusion 2322 of the pressure relief member 232 is accommodated in the pressure relief hole 2312, to realize that the protrusion 2322 does not extend beyond the first side surface 2311 of the first wall 231a in the thickness direction X of the first wall. This structure is simple and easy to assemble.

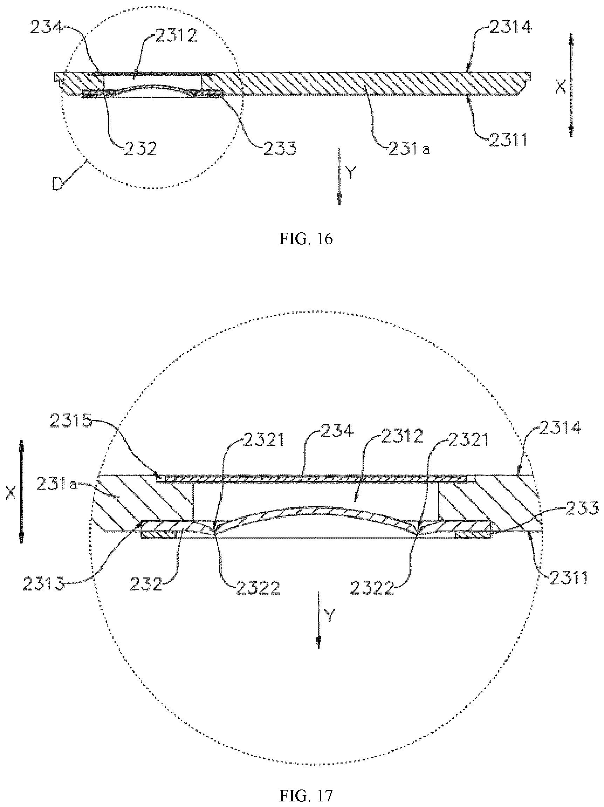

It should be indicated that in each of the structures described above, the weak structure of the pressure relief member 232 is better protected by providing the protrusion 2322 of the pressure relief member 232 to not extend beyond the first side surface 2311 in the thickness direction X of the first wall. In other embodiments, for example, referring to FIG. 16 and FIG. 17, FIG. 16 is a sectional view of a pressure relief member 232 being connected to a first wall 231a, provided by some other embodiments of the present application; and FIG. 17 is a local enlarged view of part D in FIG. 16 where the pressure relief member 232 is connected to the first wall 231a. The protrusion 2322 of the pressure relief member 232 protrudes from the surface of the pressure relief member 232 facing the interior of the battery cell 20 in the thickness direction X of the first wall. That is, the protrusion 2322 of the pressure relief member 232 protrudes from the pressure relief member 232 in the first direction Y. The end cover assembly 23 may further include an installation part 233. The installation part 233 is provided on the side of the pressure relief member 232 facing the interior of the battery cell 20, and the protrusion 2322 does not extend beyond the installation part 233 in the first direction Y, to better protect the protrusions 2322, thereby reducing phenomenon that the protrusion 2322 is worn or damaged during the production and assembly processes of the battery cell 20.

In the above, the installation member 233 may be connected to the first wall 231a, or may be connected to the surface of the pressure relief member 232 facing the interior of the battery cell 20. Exemplarily, in FIG. 17, the installation member 233 is connected to the surface of the pressure relief member 232 facing the interior of the battery cell 20. The installation member 233 may be assembled in various ways, for example, by means of bonding, snapping, welding, etc.

The installation member 233 is made of an insulating material. For example, the installation member 233 may be made of a material of polyethylene, polypropylene, plastic, rubber, etc.

In some embodiments, there is one installation member 233, and the installation member 233 surrounds the outside of the protrusion 2322. The surrounding may be one-circle closed surrounding, or unclosed surrounding, for example, half-circle surrounding or 2/3-circle surrounding

In some embodiments, multiple installation members 233 may be provided, and the multiple installation members 233 are arranged around the protrusion 2322 at intervals, that is, the multiple installation members 233 are provided surrounding the protrusion 2322.

In an embodiment in which the pressure relief member 232 is provided with an installation member 233, in the first direction Y, the protrusion 2322 may extend beyond the first side surface 2311 of the first wall 231a, or may not extend beyond the first side surface 2311 of the first wall 231a.

Similarly, the surface of the installation member 233 facing the pressure relief member 232 may be coplanar with or be misaligned with the first side surface 2311 of the first wall 231a. When the surface of the installation member 233 facing the pressure relief member 232 is misaligned with the first side surface 2311 of the first wall 231a, it may be that the surface of the installation member 233 facing the pressure relief member 232 is closer to the interior of the battery cell 20 than the first side surface 2311 of the first wall 231a in the thickness direction X of the first wall, or it may also be that the surface of the installation member 233 facing the pressure relief member 232 is further away from the interior of the battery cell 20 than the first side surface 2311 of the first wall 231a in the thickness direction X of the first wall.

According to some embodiments of the present application, the battery cell 20 may also include other structures. For example, the weak structure is a thinned region of the pressure relief member 232. In the thickness direction X of the first wall, the surface, close to the interior of the battery cell 20, of the thinned region of the pressure relief member 232 does not extend beyond the first side surface 2311 in a direction facing the interior of the battery cell 20.

In the above, the surface, close to the interior of the battery cell 20, of the thinned region of the pressure relief member 232 does not extend beyond the first side surface 2311 in the direction facing the interior of the battery cell 20. That is, the overall thinned region of the pressure relief member 232 does not extend beyond the first side surface 2311 in the direction facing the interior of the battery cell 20, in the thickness direction X of the first wall. That is, in the first direction Y, the surface of the thinned region of the pressure relief member 232 facing the interior of the battery cell 20 does not extend beyond the first side surface 2311 of the first wall 231a.

By reducing the thickness of partial region on the pressure relief member 232, the thinned region of the pressure relief member 232 is used as a weak structure for releasing the internal pressure of the battery cell 20. The structure is simple, and has low processing difficulty. In addition, the surface, close to the interior of the battery cell 20, of the thinned region of the pressure relief member 232 does not extend beyond the first side surface 2311 in the first direction Y, such that the thinned region of the pressure relief member 232 does not extend beyond the first side surface 2311 in the thickness direction X of the first wall, so as to better protect the thinned region of the pressure relief member 232, and to alleviate the phenomenon that the thinned region of the pressure relief member 232 is worn or damaged during the production and assembly processes of the battery cell 20.

According to some embodiments of the present application, as shown in FIGS. 6 and 7, the battery cell 20 further includes a protection member 234. The protection member 234 is provided at one side of the first wall 231a facing away from the interior of the battery cell 20, the protection member 234 covers the pressure relief hole 2312, and the protection member 234 is used to protect the pressure relief member 232.

In the above, the protection member 234 plays a role in protecting the pressure relief member 232. By covering the pressure relief hole 2312 with the protection member 234, the protection member 234 can reduce damage to the pressure relief member 232 caused by the external environment of the battery cell 20. The protection member 234 may be made of various materials, such as polypropylene, rubber, plastic or silicone.

The battery cell 20 is further provided with a protection member 234 for protecting the pressure relief member 232, the protection member 234 is provided at one side of the first wall 231a facing away from the interior of the battery cell 20, so as to better protect the pressure relief member 232, alleviate the risk of the pressure relief member 232 being worn or damaged by other components during later use, and protect the use stability and use reliability of the pressure relief member 232.

According to some embodiments of the present application, continuing to refer to FIG. 6 and FIG. 7, in the thickness direction X of the first wall, the first wall 231a includes a second side surface 2314 provided opposite to the first side surface 2311, the second side surface 2314 is provided with an installation groove 2315, and at least a part of the protection member 234 is accommodated in the installation groove 2315.

In the above, the installation groove 2315 is provided on the second side surface 2314 of the end cover 231 facing away from the first side surface 2311, and the pressure relief hole 2312 runs through the groove bottom surface of the installation groove 2315, so that the protection member 234 can cover the pressure relief hole 2312 when being accommodated in the installation groove 2315.

At least a part of the protection member 234 is accommodated in the installation groove 2315. That is, the protection member 234 may be entirely located in the installation groove 2315, or may partially extend out of the installation groove 2315.

It should be noted that in an embodiment in which the accommodation groove 2313 on the first wall 231a is provided on the second side surface 2314 of the first wall 231a, the protection member 234 may be directly provided on the second side surface 2314, and the protection member 234 covers the accommodation groove 2313, so as to protect the pressure relief member 232, or it may be that an installation groove 2315 is provided on the second side surface 2314, and the accommodation groove 2313 is provided on the groove bottom surface of the installation groove 2315, that is, the pressure relief hole 2312 communicates with the installation groove 2315 through the accommodation groove 2313, so as to accommodate the protection member 234 in the installation groove 2315, so as to protect the pressure relief member 232.

By providing, on the second side surface 2314, an installation groove 2315 for accommodating the protection member 234, the protection member 234 can be accommodated in the installation groove 2315, thereby better protecting the protection member 234, so as to alleviate the phenomenon that the protection member 234 is damaged due to the influence of the external environment during later use, and further facilitating prolonging the service life of the protection member 234.

In some embodiments, referring to FIG. 7, in the thickness direction X of the first wall, the protection member 234 does not extend beyond the second surface 2314.

In the above, the protection member 234 does not extend beyond the second side surface 2314, that is, the protection member 234 is in a direction away from the first direction Y, and the protection member 234 does not extend beyond the second side surface 2314. That is, the protection member 234 is entirely accommodated in the installation groove 2315.

The protection member 234 does not extend beyond the second side surface 2314 of the first wall 231a in the thickness direction X of the first wall, that is, the protection member 234 is entirely accommodated in the installation groove 2315, and the battery cell 20 using this structure can improve the protection effect on the protection member 234 to reduce the risk of the protection member 234 being damaged during use.

According to some embodiments of the present application, referring to FIG. 3, FIG. 4 and FIG. 5, the housing includes a casing 21 and end cover assemblies 23. The casing 21 includes openings 211, each end cover assembly 23 includes an end cover 231, and the end cover 231 covers the opening 211. The first wall 231a is the end cover 231.

In the above, the first wall 231a is the end cover 231, that is, the pressure relief member 232 is provided on the end cover 231 of the end cover assembly 23.

In some embodiments, the first wall 231a may be the casing 21. That is, the pressure relief member 232 may be provided on the casing 21.

For the battery cell 20 using this structure, it is easy to provide the pressure relief member 232 on the housing, facilitating reducing the difficulty in providing the pressure relief member 232 on the housing.

According to some embodiments of the present application, referring to FIG. 3 and FIG. 4, the end cover assembly 23 may further includes electrode terminals 235, a connecting member 236 and a first insulation member 237. The electrode terminals 235 are installed on the end cover 231 in an insulative manner. The connecting member 236 is provided at one side of the end cover 231 facing away from the interior of the battery cell 20, and the connecting member 236 is connected to the electrode terminals 235. The first insulation member 237 is provided between the connecting member 236 and the end cover 231, to insulate and isolate the connecting member 236 from the end cover 231.

In the above, the electrode terminal 235 plays a role in outputting an electric energy from or inputting the electric energy into the battery cell 20. The end cover 231 is provided with lead-out holes 2316 for installing the electrode terminals 235. In the thickness direction X of the first wall, the electrode terminal 235 is provided penetrating through the lead-out hole 2316, and two ends of the electrode terminal 235 extend out of the lead-out hole 2316 respectively, the end of the electrode terminal 235 facing the interior of the battery cell 20 is used to be connected to the tab 221 of the electrode assembly 22, to realize electrical connection between the electrode terminal 235 and the electrode assembly 22, and the end of the electrode terminal 235 facing away from the interior of the battery cell 20 is used as the output electrode of the battery cell 20.

The electrode terminal 235 is installed on the end cover 231 in an insulative manner, that is, there is no electrical connection between the electrode terminal 235 and the end cover 231.

Exemplarily, in FIG. 4 and FIG. 5, there are two electrode terminals 235, correspondingly, there are two lead-out holes 2316 on the end cover 231, each electrode terminal 235 penetrates through one lead-out hole 2316, and two electrode terminals 235 are both used to be electrically connected to the tab 221 of the electrode assembly 22, so as to cooperatively used as the positive output electrode or negative output electrode of the battery cell 20. Of course, in other embodiments, the number of electrode terminals 235 may also be one, three, or four, and correspondingly, the lead-out holes 2316 and the electrode terminals 235 are provided in one-to-one correspondence.

The connecting member 236 is used to connect the electrode terminal 235 to fix the electrode terminal 235 and other components onto the end cover 231. Exemplarily, the connecting member 236 is a riveting block. In FIG. 4, the connecting member 236 is riveted to both the two electrode terminals 235, so as to fasten the electrode terminal 235 and the first insulation member 237 to the end cover 231.

The first insulation member 237 is provided between the end cover 231 and the connecting member 236 in the thickness direction X of the first wall, to separate the end cover 231 and the connecting member 236, so as to realize the insulation and isolation between the end cover 231 and the connecting member 236. The first insulation member 237 may be made of various materials, such as plastic, rubber, or silicone.

In some embodiments, as shown in FIG. 5, the end cover assembly 23 may further include a sealing member 238, the sealing member 238 is sleeved over the outside of the electrode terminal 235, and at least a part of the sealing member 238 is located within the lead-out hole 2316 to seal the gap between the electrode terminal 235 and the hole wall of the lead-out hole 2316.

In the above, at least a part of the sealing member 238 is located in the lead-out hole 2316, that is, the sealing member 238 surrounds the outside of the electrode terminal 235, and the sealing member 238 may be entirely located in the lead-out hole 2316, or may be partially located in the lead-out hole 2316, so as to seal the gap between the electrode terminal 235 and the hole wall surface of the lead-out hole 2316, thus reducing the risk of occurrence of leakage of electrolytic solution from the battery cell 20.

Exemplarily, in FIG. 5, the sealing member 238 is a sealing ring, and the sealing member 238 may be made of a material of rubber, silicone or plastic, etc.

The electrode terminals 235 are installed on the end cover 231 in an insulative manner, and the electrode terminals 235 are connected to the connecting member 236 provided on the side of the end cover 231 facing away from the interior of the battery cell 20, so as to stably fix the electrode terminals 235 on the end cover 231 and facilitate assembly. Therefore, the input of electric energy into the battery cell 20 and the output of electric energy from the battery cell can be realized through the electrode terminals 235 provided on the end cover 231. In addition, a first insulation member 237 is further provided between the connecting member 236 and the end cover 231, and the insulation and isolation between the connecting member 236 and the end cover 231 can be achieved through the first insulation member 237, so as to reduce the risk of short circuit in battery cell 20.

According to some embodiments of the present application, continuing to refer to FIG. 4 and FIG. 5, the end cover assembly 23 may further includes a current collecting member 239 and a second insulation member 240. The current collecting member 239 is provided at one side of the end cover 231 facing the interior of the battery cell 20, and the current collecting member 239 is connected to the electrode terminals 235 and the electrode assembly 22. The second insulation member 240 is provided between the current collecting member 239 and the end cover 231, to insulate and isolate the current collecting member 239 from the end cover 231.

In the above, the current collecting member 239 plays a role of connecting the electrode terminal 235 and the tab 221 of the electrode assembly 22, to realize the electrical connection between the electrode terminal 235 and the electrode assembly 22. The current collecting member 239 may be made of a variety of materials, such as copper, iron, aluminum, steel, etc.

The second insulation member 240 is provided between the current collecting member 239 and the end cover 231 in the thickness direction X of the first wall, to insulate and isolate the current collecting member 239 from the end cover 231. The second insulation member 240 may be made of various materials, such as rubber, plastic cement, or plastic.

The side of the end cover 231 facing away from the connecting member 236 is further provided with a current collecting member 239. The current collecting member 239 can connect the electrode terminals 235 and the electrode assembly 22, thereby realizing the electrical connection between the electrode assembly 22 and the electrode terminals 235. The structure is simple, and easy to assemble. In addition, a second insulation member 240 is further provided between the current collecting member 239 and the end cover 231, and the insulation and isolation between the current collecting member 239 and the end cover 231 can be realized through the second insulation member 240, so as to reduce the risk of short circuit in the battery cell 20.

According to some embodiments of the present application, embodiments of the present application further provide a battery 100, which battery 100 includes the battery cell 20 of any solution above.

According to some embodiments of the present application, embodiments of the present application further provide an energy storage apparatus, including the battery 100 of any solution above.

Exemplarily, the energy storage apparatus may be an energy storage cabinet or an energy storage container, etc.

According to some embodiments of the present application, embodiments of the present application further provide an electrical apparatus, including the battery cell 20 of any solution above, where the battery cell 20 is used to provide electric energy for the electrical apparatus.

The electrical apparatus may be any of the aforementioned apparatuses or systems using the battery cell 20.

According to some embodiments of the present application, referring to FIG. 4 to FIG. 10, the present application provides a battery cell 20, where the battery cell 20 includes a casing 21, an electrode assembly 22 and end cover assemblies 23. The casing 21 includes openings 211 and the electrode assembly 22 is accommodated in the casing 21. The end cover assembly 23 includes an end cover 231, a pressure relief member 232, a protection member 234, electrode terminals 235, a connecting member 236, a first insulation member 237, a current collecting member 239 and a second insulation member 240. The end cover 231 covers the opening 211, the end cover 231 is first wall 231a, and in the thickness direction X of the first wall, the end cover 231 includes a first side surface 2311 and a second side surface 2314 provided opposite to each other, the first side surface 2311 is provided facing the interior of the battery cell 20, the first side surface 2311 is provided with an accommodation groove 2313, the second side surface 2314 is provided with an installation groove 2315, the end cover 231 is provided with a pressure relief hole 2312, and two ends of the pressure relief hole 2312 runs through the groove bottom surface of the accommodation groove 2313 and the groove bottom surface of the installation groove 2315 in the thickness direction X of the first wall, respectively. The pressure relief member 232 is provided in the accommodation groove 2313 and covers the pressure relief hole 2312, and in the thickness direction X of the first wall, one side of the pressure relief member 232 facing away from the interior of the battery cell 20 is provided with an indented groove 2321, and a protrusion 2322 is formed at a position of the pressure relief member 232 facing the interior of the battery cell 20 and corresponding to the indented groove 2321. The pressure relief member 232 has a first surface 2323 facing the interior of the battery cell 20, the first surface 2323 is coplanar with the first side surface 2311, the first surface 2323 is provided with a groove 2324, and the protrusion 2322 is accommodated in the groove 2324, and the protrusion 2322 does not extend beyond the first surface 2323 in the thickness direction X of the first wall. The protection member 234 is provided in the installation groove 2315 and covers the pressure relief hole 2312, and in the thickness direction X of the first wall, the protection member 234 does not extend beyond the second side surface 2314. The electrode terminals 235 are installed on the end cover 231 in an insulative manner. In the thickness direction X of the first wall, the connecting member 236 is provided at one side of the end cover 231 facing away from the interior of the battery cell 20, and the connecting member 236 is connected to the electrode terminals 235. The first insulation member 237 is provided between the connecting member 236 and the end cover 231, to insulate and isolate the connecting member 236 from the end cover 231. In the thickness direction X of the first wall, the current collecting member 239 is provided at one side of the end cover 231 facing the interior of the battery cell 20, and the current collecting member 239 is connected to the electrode terminals 235 and the current collecting member 239 is used to be electrically connected to the electrode assembly 22. The second insulation member 240 is provided between the current collecting member 239 and the end cover 231, to insulate and isolate the current collecting member 239 from the end cover 231.

It should be noted that without conflict, the embodiments and the features of the embodiments in the present application may be combined with each other.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present application.

## Claims

1. A battery cell, comprising:
a housing comprising a first wall, wherein the first wall comprises a first side surface facing an interior of the battery cell, and the housing is configured to accommodate an electrode assembly; and
a pressure relief member provided on the first wall,
wherein the pressure relief member comprises a weak structure, and in a thickness direction of the first wall, the weak structure does not extend beyond the first side surface in a direction facing the interior of the battery cell.

2. The battery cell according to claim 1, wherein the weak structure is a region of the pressure relief member where an indented groove is provided; and
the indented groove is provided on one side of the pressure relief member facing away from the interior of the battery cell, and the pressure relief member is provided with a protrusion on the side facing the interior of the battery cell at a position corresponding to the intended groove, and the protrusion does not extend beyond the first side surface in the direction facing the interior of the battery cell.

3. The battery cell according to claim 2, where in the thickness direction of the first wall, a distance between the protrusion and the first side surface is H, satisfying H>0 mm.

4. The battery cell according to claim 2 or 3, wherein the pressure relief member comprises a first surface facing the interior of the battery cell, the first surface is provided with a groove, and at least a part of the protrusion is accommodated in the groove.

5. The battery cell according to claim 4, wherein in the thickness direction of the first wall, the protrusion does not extend beyond the first surface.

6. The battery cell according to claim 5, wherein the first surface is coplanar with the first side surface; or
in the thickness direction of the first wall, the first surface is further away from the interior of the battery cell than the first side surface.

7. The battery cell according to any one of claims 4 to 6, wherein the pressure relief member comprises:
a pressure relief part provided with the indented groove, wherein the protrusion is formed on one side of the pressure relief part facing the interior of the battery cell at a position corresponding to the indented groove; and
an installation part connected to the first wall, where the installation part is provided surrounding the pressure relief part,
wherein a thickness of the installation part is larger than a thickness of the pressure relief part, and the installation part encloses the pressure relief part to form the groove.

8. The battery cell according to claim 7, wherein the thickness of the installation part is L₁, satisfying 0.1mm≤L₁≤0.4mm.

9. The battery cell according to claim 7 or 8, wherein a minimum thickness of the pressure relief part at a position where the indented groove is provided is L₂, satisfying 0.03mm≤L₂≤0.15mm.

10. The battery cell according to any one of claims 7 to 9, wherein the indented groove is an annular groove, and in the thickness direction of the first wall, a region of the pressure relief part located inside the indented groove is arched in a direction away from the interior of the battery cell.

11. The battery cell according to any one of claims 7 to 10, wherein the pressure relief member is of a circular structure.

12. The battery cell according to any one of claims 2 to 11, wherein the pressure relief member and the first wall are of a split structure, the first wall is provided with a pressure relief hole, and the pressure relief member covers the pressure relief hole.

13. The battery cell according to claim 12, wherein the first side surface is provided with an accommodation groove, the pressure relief hole runs through a groove bottom surface of the accommodation groove, and the accommodation groove is configured to accommodate at least a part of the pressure relief member.

14. The battery cell according to claim 13, wherein the accommodation groove comprises a first groove and a second groove, the second groove is provided on a groove bottom surface of the first groove, and the pressure relief hole runs through a groove bottom surface of the second groove,
wherein the pressure relief member is installed in the second groove and abuts against the groove bottom surface of the second groove, and the protrusion is accommodated in the first groove.

15. The battery cell according to claim 12, wherein in the thickness direction of the first wall, the first wall comprises a second side surface provided opposite to the first side surface, the second side surface is provided with an accommodation groove, the pressure relief hole runs through a groove bottom surface of the accommodation groove, and the accommodation groove is configured to accommodate at least a part of the pressure relief member.

16. The battery cell according to claim 15, wherein the accommodation groove comprises a third groove and a fourth groove, the fourth groove is provided on a groove bottom surface of the third groove, and the pressure relief hole runs through a groove bottom surface of the fourth groove,
wherein the pressure relief member is installed in the fourth groove and abuts against a groove bottom surface of the fourth groove, and the protrusion is accommodated in the pressure relief hole.

17. The battery cell according to claim 1, wherein the weak structure is a thinned region of the pressure relief member; and
in the thickness direction of the first wall, a surface, close to the interior of the battery cell, of the thinned region of the pressure relief member does not extend beyond the first side surface in a direction facing the interior of the battery cell.

18. The battery according to any one of claims 12 to 16, wherein the battery cell further comprises:
a protection member, provided at one side of the first wall facing away from the interior of the battery cell, wherein the protection member covers the pressure relief hole, and the protection member is configured to protect the pressure relief member.

19. The battery cell according to claim 18, wherein in the thickness direction of the first wall, the first wall comprises a second side surface provided opposite to the first side surface, the second side surface is provided with an installation groove, and at least a part of the protection member is accommodated in the installation groove.

20. The battery cell according to claim 19, wherein in the thickness direction of the first wall, the protection member does not extend beyond the second side surface.

21. The battery cell according to any one of claims 1 to 20, wherein the housing comprises:
a casing comprising an opening; and
an end cover assembly, comprising an end cover covering the opening,
wherein the first wall is the end cover.

22. The battery cell according to claim 21, wherein the end cover assembly further comprises:
electrode terminals, installed on the end cover in an insulative manner;
a connecting member, provided at one side of the end cover facing away from the interior of the battery cell, wherein the connecting member is connected to the electrode terminals; and
a first insulation member, provided between the connecting member and the end cover, to insulate and isolate the connecting member from the end cover.

23. The battery cell according to claim 22, wherein the end cover assembly further comprises:
a current collecting member, provided at one side of the end cover facing the interior of the battery cell, wherein the current collecting member is connected to the electrode terminals and the electrode assembly; and
a second insulation member, provided between the current collecting member and the end cover, to insulate and isolate the current collecting member from the end cover.

24. A battery, comprising the battery cell according to any one of claims 1 to 23.

25. An energy storage apparatus, comprising the battery according to claim 24.

26. An electrical apparatus, comprising the battery cell according to any one of claims 1 to 23.
